# EUROPEAN PATENT SPECIFICATION

(11) **EP 0 736 585 B1**
(45) Date of publication and mention of the grant of the patent: **01.09.1999**
(21) Application number: 95104953.5
(22) Date of filing: 03.04.1995
(51) Int. Cl.: C09J 133/08, C08K 3/22

(54) **Pressure sensitive adhesive**
Druckempfindlicher Klebstoff
Adhésif sensible à la pression

(43) Date of publication of application: 09.10.1996
(73) Proprietor: MINNESOTA MINING AND MANUFACTURING COMPANY, St. Paul, Minnesota 55133-3427 (US)
(72) Inventor: Kreckel, Karl c/o Minnesota Mining & Manuf. Co., St Paul, Minnesota 55144-1000 (US); Honig, Horst c/o Minnesota Mining & Manuf. Company, St Paul, Minnesota 55144-1000 (US)
(74) Representative: Wilhelm, Stefan

(56) References cited:
- EP-A- 0 213 737
- WO-A-91/06424
- US-A- 5 202 361

## Description

### Field of the invention

The present invention relates to a removable and/or reactivatable transparent pressure sensitive adhesive obtainable by polymerizing an alkyl acrylate based precursor comprising a filler component. The invention further relates to unsupported films and to supported films comprising said pressure sensitive adhesive arranged on a flexible or stiff backing or carrier film.

### Background of the invention

Removable pressure sensitive adhesives (PSAs) which predictably adhere, yet remain repeatedly peelable from a variety of smooth substrates such as glass, metal, wood, paper with matte or glossy finish surfaces or polymer substrates over a long period of time without damaging the substrate or leaving any adhesive residue or stain on the surface, are described in the literature. They are often provided as a sheet material which may be unsupported or supported by a flexible backing such as, for example, a biaxially-oriented polyethylene terephthalate film or by a stiff backing such as, for example, a polyurethane foam laminated with paper sheets.

Ideally, depending on the substrate, the removable PSA must provide a quick initial adhesion (sufficient initial tack or quick stick) to quickly fix the adhesive to the desired substrate. On the other hand, the PSA should exhibit only a low and at any rate acceptable adhesion buildup with time, even at elevated temperatures, to ensure clean peelability after a prolonged dwell.

The PSA should furthermore be characterized by an adequate peel strength to give a reliable, high performance adhesion to the substrate without damaging the substrate when removing the adhesive.

Another requirement is a sufficient cohesive and tensile strength and hence form and dimensional stability of the PSA sheet to allow proper handling and, in particular, the reapplication of the PSA to substrate after having peeled it off once or several times. The cohesive strength must be adjustable to the thickness of the adhesive layer and should typically be higher the thicker the adhesive layer. A sufficient cohesive strength is also required in order to limit the cold flow of the adhesive on a surface, a process which leads to an undesirable build-up of peel strength over time.

The static shear strength should be high enough to allow light-duty mounting applications without being too high to result in permanent adhesion.

The PSA should furthermore exhibit a high resistivity against water in order to allow outdoor applications. Furthermore, a high resistance against organic solvents is desirable.

The PSA should furthermore be relatively insensitive against contamination with, for example, dust, dirt or sweat, to ensure a sufficient number of cycles of removing and reapplication, and/or the PSA should be reactivatable or cleanable to increase the reusability and to ensure proper performance of the PSA during its lifetime.

Another requirement is that the PSA should be transparent for visible light in order to allow, for example, an essentially invisible mounting of objects on transparent substrates such as glass or transparent polymers.

Balancing these desirable properties in a removable PSA poses difficulties to the formulator, and the removable PSA materials described in the state of the art do not meet the profile of properties specified above to an adequate or desirable extent.

US 4,599,265 (Esmay) describes a removable PSA in which the monomer component is based on alkyl acrylates and can contain up to 3 mole% of strongly polar copolymerizable monomers and up to 15 mole% of moderately polar copolymerizable monomers. The desired 180° peel properties from glass are adjusted by adding a crosslinker component to the precursor of the PSA. The PSA material described by Esmay exhibits rather low values of the shear strength and tensile strength which do not meet all practical requirements. It is furthermore often characterized by a rather high solubility for organic solvents. The PSA material by Esmay furthermore exhibits some drawbacks with respect to its mechanical handleability and it is, for example, often difficult to diecut or to slit.

US 4,710,536 (Klingen et al.) describes a PSA, the precursor of which mainly relies on alkyl acrylates and additionally contains polar comonomers like, for example, acrylic acid in a concentration of typically 10%. The precursor of the PSA further contains hydrophobic silica as a filler in an amount by weight of 2-15 phr. Tapes comprising the PSA by Klingen are, however, only initially removable, "but within a few days they normally cannot be removed" (see col.4, Ins.43-50). The PSA by Klingen is furthermore characterized by a relatively poor reactivatability.

DE 42 14 507 (Kreckel et al.) describes pressure sensitive adhesives, the precursor of which mainly relies on alkyl acrylates. The precursor additionally contains a filler component comprising a naturally occuring polysaccharide such as cellulose powder or cotton fibres. The PSA material by Kreckel is, however, white-opaque and is thus less attractive from an aesthetical point of view. Its re-activatability furthermore does not meet all practical requirements.

WO 93/3,148 (Everaerts et al.) describes a removable, low melt viscosity acrylic PSA, the precursor of which comprises a lower alkyl and a higher alkyl acrylate component, a polar comonomer component and a crosslinker component. The PSA by Everaerts is, however, characterized by a relatively poor reactivatability.

US 5,202,361 (Zimmermann) describes radiation-curable, tackifier-free compositions which contain (i) a blend of certain acrylate esters and monoethylenically-unsaturated copolymerizable monomers, (ii) certain λ-olefin polymers, and (iii) a photoinitiator and optionally, a crosslinker. Pressure-sensitive adhesives having good adhesion to both low and high energy surfaces as well as possessing excellent low and high temperature performance properties are obtained from such composition by photopolymerization.

The removable PSA materials described in the state of the art, thus do not meet the profile of properties mentioned above to a sufficient and/or practically desirable degree. Therefore there currently exists a need for removable PSA materials which display a superior balance of tack, peel strength, cohesive strength, shear strength, resistance against water and organic solvents, reactivatability and optical transparency.

There was therefore a need for providing a removable PSA material which meets the above mentioned desirable profile of properties to a practically relevant degree and/or to a higher degree than removable PSA materials described in the state of the art.

### Summary of the Invention

The present invention relates to a removable and/or reactivatable PSA which is obtainable by polymerizing a precursor which contains one or more alkyl acrylates, the alkyl groups of which have an average of 4-14 C atoms, and which is essentially free from strongly polar comonomers, said precursor further comprising at least about 2 phr of hydrophobic silica, one or more polymerization initiators and one or more crosslinking compounds in a concentration resulting in a crosslinking density which is obtainable by using tripropyleneglycoldiacrylate as a reference crosslinker in a concentration of 0.15 phr or more. The term phr or pph means parts per hundred resin and gives the mass ratio of, for example, the crosslinking component (or of another component) with respect to the mass of the polymerizable monomer component.

The present invention furthermore refers to unsupported or supported films which comprise the pressure sensitive adhesive according to the present invention. Supported films comprise a backing bearing at least one exposed adhesive layer on one side of the backing or at least one exposed adhesive layer on each of the two opposite sides of the backing, thus forming a single-coated or a double-coated film, the adhesive layer in the single-coated film and at least one of the adhesive layers in the double-coated film being a pressure sensitive adhesive according to the present invention.

The invention furthermore refers to a double-coated film comprising a backing bearing at least one exposed adhesive layer on each of the opposite sides of a backing with at least one of the adhesive layers being a reactivatable and removable pressure sensitive adhesive which exhibits a value of 90° peel adhesion of the uncontaminated virgin pressure sensitive adhesive layer on stainless steel after a dwell time of 20 minutes at room temperature of between 3 N/1.27 cm and 20 N/1.27 cm.

The PSA materials and the films according to the present invention exhibit advantageous properties and they are highly suitable for a great variety of applications such as, for example, as reactivatable mounting devices, as skid-resistant pads or skid-resistant feet, cushions or spacers to provide protection, as cleaning devices, as temporary labels, signs or decorative sheetings or strips, protective coatings, free layer vibration dampers or constrained layer vibration dampers. The PSA materials and the films according to the present invention can be tailor-made and optimized in order to meet the requirements of a specific application to an especially high degree.

### Detailed Description of the Invention

The present invention relates to removable PSA materials which preferably are also reactivatable.

In literature, PSA materials which predictably adhere but are repeatedly peelable from a variety of smooth substrates over a long period of time without damaging the substrate or leaving any adhesive residue or stain on the surface, are usually described as removable. In the present specification, the following definition is used: PSA materials which exhibit an initial value of 90° peel adhesion after 20 minutes dwell time at room temperature on stainless steel of the fresh, i.e. uncontaminated adhesive layer of less than 20 N/1.27 cm which value does not change by more than 50% after 3 days dwell time at room temperature, are termed as removable. Above the limit of 20 N/1.27 cm, removing of the PSA materials from stainless steel is often found to be difficult, and splitting is frequently observed, in particular, for PSA materials exhibiting a low crosslinking density. The removable PSA materials according to the present invention can be classified as follows:

| **adhesion behavior** | **90° peel adhesion from stainless steel** |
|---|---|
| low adhesion | 0-3 N/1.27 cm |
| medium adhesion | 3-8 N/1.27 cm |
| high adhesion | 8-20 N/1.27 cm |

The term PSA materials as used in the present specification thus refers to materials which exhibit low or very low values of adhesion (peel adhesion > 0, in particular >0.1 N/1.27 cm and ≤ 3 N/1.27 cm) to medium or high values of adhesion (peel adhesion ≤ 20N/1.27 cm) and which can be designed for a wide variety of applications ranging from mounting devices to skid-resistant pads. It should be noted that the present use of the term PSA thus extends beyond what in conventional use is covered by this term.

The term reactivatable as used above and below, relates to PSA materials exhibiting after 10 cycles of contamination and reactivation according to methods I or II as described below, values of 90° peel adhesion after 20 minutes dwell time at room temperature on stainless steel of 50% or more with respect to the corresponding values of 90° peel adhesion measured for the fresh, uncontaminated adhesive layer. Preferred are PSA materials exhibiting after 10 cycles of contamination and reactivation a value of 90°degree peel adhesion of 50% or more with respect to the value of 90° peel measured for the fresh, uncontaminated adhesive layer for one of the two methods I and II, and a value of 60% or more for the other of both methods. All values of 90° peel adhesion given in this paragraph refer to a stainless steel surface and were measured after a dwell time of 20 minutes at room temperature.

The precursor of the removable PSA material according to the present invention comprises one or more alkyl acrylates the alkyl groups of which have an average of 4-14 C atoms. The term average of 4-14 C atoms means that the average number of C atoms of the alkyl acrylate compounds, weighed by their respective percentage by weight with respect to the mass of the alkyl acrylate component, is between 4-14 and, in particular, between 4-12 C atoms.

Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2-ethylhexyl acrylate, isononyl acrylate and dodecyl acrylate.

The precursor preferably contains up to 5 and, in particular, 1-4 alkyl acrylates. The average number of carbon atoms in the alkyl groups of the alkyl acrylates as defined above, preferably is between 4-14, especially between 4-12 and very particularly between 5-10. The concentration of the alkyl acrylate component with respect to the mass of the precursor of the pressure sensitive adhesive preferably is at least 75 wt.%, and, in particular, at least 85 wt.%.

The precursor of the PSA can contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and, in particular, does not exceed 25 wt.% with respect to the mass of the alkyl acrylate component.

It was found that the presence of polar comonomers is usually detrimental to the resistance of the PSA against water and organic solvents and limits its removability and reactivatability.

The term polar monomers includes both moderately polar and strongly polar monomers. Polarity (i.e., hydrogen-bonding ability) is frequently described by the use of terms such as 'strongly', 'moderately', and 'poorly'. References describing these and other solubilty terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol.38, No.496, pp.269-280. Examples for strongly polar monomers are acrylic acid, methacrylic acid and acrylamides while N-vinyl lactams such as, for example, N-vinyl pyrrolidone, N-vinyl caprolactam, acrylonitrile and dimethyl amino-propyl methacrylate are typical examples of moderately polar monomers.

It was found that the PSA materials according to the present invention preferably contain no polar comonomers because a superior balance of tack, peel strength, cohesive strength, shear strength, resistance against water and organic solvents, reactivatability and optical transparency can be obtained without adding polar monomers. Adding a polar comonomer component typically distinctly decreases the resistance against water and organic solvents and especially the reactivatability which adversely affects the desired mix of properties of the removable PSA to an undesirable or even unacceptable degree.

An essential part of the precursor of the PSA according to the present invention is the filler component comprising at least 2.0 phr, especially at least 3.0 phr and very specifically at least 4.0 phr of hydrophobic silica. In an especially preferred embodiment, the amount of the hydrophobic silica is between 5-25 phr, especially between 5-20 phr and very specifically between 5-15 phr.

Hydrophobic silica is commercially available, for example, from Degussa, Hanau as "Aerosil" R972, R974 or R976. According to a Degussa bulletin entitled "Product Information" of June 4, 1984, the hydrophobic silicas "Aerosil" R972, R974 and R976 are prepared from hydrophilic silicas denoted as "Aerosil" 130, 200 and 300, respectively, which exhibit a surface area of 130, 200 and 300 m²/g, respectively. Hydrophobic silica is furthermore commercially available, for example, as TS-720 from Cabot Cab-O-Sil Division, Tuscola, Illinois, U.S.A. In US 2,859,198 (Sears et al.) it is proposed that the surface of finely-divided inorganic solid silicon-containing materials, such as silica, can be rendered hydrophobic by treating the material with an organo-siloxane material. According to US 4,136,081 (Schultz), silica "can be treated with organosilicon materials such as chlorosilanes, silazanes, alkoxysilanes and cyclic siloxanes to produce hydrophobic surfaces" (col.6, lns.47-52).

The enumeration of hydrophobic silica materials given above, and the description of some selected methods for preparing hydropobic silica materials is to be understood as illustrative and by no means limitative. The hydrophobic silica used to prepare the PSA materials according to the present invention, preferably exhibits a surface area of at least 10 m² /g and especially of at least 50 m²/g. The surface area of the hydrophobic silica especially preferably is between 50 to 400 m²/g (B.E.T. surface area).

The specific selection of hydrophobic silica in combination with the other components of the precursor of the PSA materials according to the present invention as specified, results in an outstanding and especially advantageous balance of properties. Substituting hydrophobic silica in the precursor according to the present invention with
- hydrophilic silica, results in PSA materials exhibiting disadvantageous values of the peel strength and a relatively poor reactivatability, especially after contamination with finely divided or powdered particles such as dust. When mixing hydrophilic silica with the other components of the precursor of the PSA according to the present invention, uniform and useful dispersions are obtained only up to loadings of about 4 phr while hydrophobic silica allows concentrations of up to 25 phr or even more. The limited range of concentration accessible with hydrophilic silica, results in a lower mechanical strength of the PSA materials and restricts the possibilities of the formulator to finetune the properties of the PSA material.
- polysaccharide fillers such as cellulose fibres, starch fibres or cotton fibres, yield PSA materials with limited reactivatability, especially after contamination with finely divided or powdered particles such as dust. Mixing polysaccharide fillers with the other components of the precursor of the present invention results in PSA materials which exhibit on smooth surfaces such as, for example, stainless steel or glass a decrease of shear strength with increasing crosslinker concentration while the PSA materials according to the present invention show the opposite behaviour. PSA materials containing cellulose fillers, are furthermore white-opaque and therefore both less attractive from an aesthetic point of view and of restricted applicability.
- other inorganic fillers such as, for example, finely divided iron oxide, titanium dioxide, calcium carbonate or carbon black adversely affect adhesion, static shear, optical clarity, viscosity and/or coatability of the resulting PSA materials.
- other organic fillers such as, for example, polymeric microspheres often adversely affect the adhesion and/or optical properties of the resulting PSA materials.

The filler component of the PSA materials according to the present invention mainly consists of one or more hydrophobic silicas which may differ with respect to their surface area and/or the method of preparation used. The filler component preferably contains at least 75 wt.%, especially not less than 85 wt.% and very particularly 100 wt.% of one or more hydrophobic silicas with respect to the mass of the filler component.

The precursor according to the present invention contains a crosslinker component to increase the cohesive strength and the tensile strength of the resulting PSA material. Useful crosslinkers include benzaldehyde, acetaldehyde, anthraquinone, various benzophenone-type and vinyl-halomethyl-s-triazine type compounds such as, for example, 2,4-bis(trichloromethyl)-6-p-methoxystyryl-s-triazine. Preferred are polyacrylic-functional monomers such as, for example, trimethylolpropane triacrylate, pentaerythritol tetraacrylate, 1,2-ethylene glycol diacrylate, tripropyleneglycoldiacrylate, 1,6-hexanediol diacrylate or 1,12-dodecanediol diacrylate. The compounds listed above, which can be substituted or unsubstituted, are intended to be illustrative and by no means limitative.

The crosslinking component to be used in the present invention preferably contains 1-5, especially between 1-3 and very particular 1-2 crosslinker compounds. Especially preferred crosslinker compounds are 1,6-hexanedioldiacrylate and tripropyleneglycoldiacrylate.

The degree of crosslinking (crosslink density) which can be expressed as the number of cross-links per gram or per unit volume of the polymer, can be estimated theoretically and determined experimentally, for example, by swelling measurements or via stress strain curves (see Encyclopedia of Polymer Science and Engineering, 2nd. ed., New York 1988, vol.4, p. 355-357). A detailed description of swelling measurements which are preferred, is given in P.J. Flory, Principles of Polymer Chemistry, Cornell University Press, Ithaca and London, 1953, p.579. When reacting two different precursors which differ with respect to the crosslinker component but are otherwise identical, under identical external reaction conditions (polymerization method such as bulk, solution, emulsion or suspension polymerization, temperature, pressure, irradiation in case of UV-polymerization, etc.), the crosslink density obtained depends on the chemical nature of the crosslinkers used, their functionality and their respective concentration. In the present application, the crosslink density is reported with respect to the crosslink density which is obtainable by using variable amounts of tripropyleneglycol diacrylate (TPGDA) as a reference crosslinker component under standardized reaction conditions (bulk photopolymerization, photoinitiator: Irgacure 651, supplied by Ciba Geigy, in a concentration of 0.24 phr; UV irradiation with an exposure of 900-1500 mJ/cm² from an UV lamp, 90% of the emissions of which are between 300 and 400 nm, with a maximum at 351 nm; room temperature; normal pressure; exclusion of oxygen).

The precursor according to the present invention contains one or more crosslinker compounds in a concentration to give a crosslink density obtainable by using TPGDA as a reference crosslinking compound in an otherwise identical precursor under identical external conditions, in a concentration of 0.15 phr or more and preferably of 0.30 phr or more. It was found that for lower crosslinker concentrations, the mechanical strength, the removability and the reactivatability are insufficient and do not meet all practical requirements especially in case the loading with hydrophobic silica is less than 5 and, in particular, less than 3 phr. It was also found that the precursor preferably exhibits a crosslink density obtainable by using TPGDA in a concentration of not more than 5.0 phr because above this value, the shear strength on most surfaces, even on smooth surfaces, such as, for example, glossy paper or polyester film, tends to become too low.

The precursor according to the present invention preferably contains one or more crosslinker compounds in a concentration to give a crosslink density obtainable by using TPGDA in a concentration between 0.3 - 4.5 phr. The concentration of TPGDA preferably is between 0.4 to 4.0 phr. The concentration of TPGDA preferably is 1.0 phr or more and especially preferably between 1.0 and 4.5 phr.

The PSA materials according to the present invention can be obtained by applying generally known polymerization methods such as bulk, solution, emulsion or suspension polymerization. Due to environmental reasons bulk polymerization is often preferred in order to avoid using organic solvents.

The polymerization reaction is preferably started by means of a polymerization initiator and preferably proceeds via a radical polymerization mechanism. Useful examples of polymerization initiators include photoactivatable initiators such as, for example, benzoin ethers (e.g., benzoin methyl ether, benzoin isopropyl ether, substituted benzoin ethers such as anisoin methyl ether), acetophenones (e.g., 2,2-diethoxyacetophenone) or alpha-ketols (e.g., 2-methyl-2-hydroxy-propiophenone), and/or thermally activatable initiators such as, for example, organic peroxides (e.g., benzoyl peroxide and lauryl peroxide) and 2,2'-azobis(isobutyronitrile). Photopolymerization and the addition of photoactivatable initiators are preferred. The initiator component preferably comprises between 1-3 and, in particular, between 1-2 initiator compounds; especially preferred are initiator components containing only one photoinitiator. The initiator component is preferably present in an amount of 0.012.00 phr, in particular, between 0.05-1.00 phr and very specifically between 0.1-0.5 phr.

In a preferred method of preparation, a part of the initiator component is added to the alkyl acrylate component which is partly polymerized to a degree of typically 2-30% to form a syrup of coatable viscosity of, for example, 300-20,000 cps (Brookfield) at ordinary room temperatures. The viscosity of the syrup is preferably adjusted to the amount of hydrophobic silica to be added. For high loadings with hydrophobic silica of, for example, 15 phr or more, the viscosity of the syrup preferably is not more than 1,000 cps and, in particular, between 250 and 1,000 cps. For lower loadings with hydrophobic silica, the viscosity preferably is not less than 1,500 cps and, in particular, 1,750 cps or more. The viscosity of the precursor can also be adjusted by adding a small amount of typically less than 5 phr of a polymeric additive which preferably is a photopolymerizable polyacrylate as is described, for example, in WO 94/00,052. The polymerization preferably proceeds as photopolymerization which is described, for example, in US 4,181,752. In a preferred embodiment, the polymerization is carried out with UV black lights having over 60 percent, and preferably over 75 percent of their emission spectra between 280 to 400 nm, with an intensity between about 0.1 to about 25 mW/cm². The exposure is typically between 900-1,500 mJ/cm². The polymerization may be stopped either by removal of the radiation or heat source and/or introduction of, for example, radical scavenging oxygen.

The filler component essentially comprising hydrophobic silica, is subsequently added to the prepolymerized syrup. When the amount of the hydrophobic silica exceeds about 8 phr, it has been found necessary to employ a high-shear mixer such as a paint mill to obtain uniform dispersions. By doing so and by properly adjusting the viscosity of the pre-polymerized syrup, useful and essentially uniform dispersion can be obtained for loadings as high as about 25 phr.

The dispersion obtained is mixed with the remaining part of the initiator component and, optionally, with other adjuvants such as, for example, chain transfer agents, polymer additives like, for example, those described in EP 0,349,216 or EP 0,352,901, solvents, fire retardants, pigments, colorants, odor masking agents and/or other adjuvents known in the tape art. Especially preferred is the addition of pigments, colorants and/or paints which impart color to the resulting PSA materials without adversely affecting their transparency and clarity. An example of a suitable paint is Yellow Permalink CTL-Druckfarbe (printing paint) which is obtainable from SICPA Druckfarben, Backnang.

To produce PSA films according to the present invention, the above dispersion or mixture obtained is coated onto a backing, a carrier web or a release liner and polymerized in an inert, i.e. oxygen free atmosphere, for example a nitrogen atmosphere. Above and below, the term film is used to describe a structure whose thickness is substantially less than either its length or width and which has two, essentially parallel opposed surfaces. As used herein, the term film includes, for example, sheets, ribbons, tapes and discs.

The films obtained can be supported or unsupported, and they exhibit a thickness between 30 to 20,000 µm, preferably between 100 - 10,000 µm, especially between 200 - 10,000 µm and very specifically of more than 250 µm. Supported films comprising two exposed adhesive layers on opposite sides of the backing, will be termed above and below as double-coated films while supported films comprising one exposed adhesive layer on one side of the backing only, will be termed above and below as single-coated films. The present invention allows the preparation of relatively thick to thick adhesive films which is due to the excellent mechanical properties of the PSA material according to the present invention. Especially preferred are unsupported films with a thickness of at least 200 µm comprising a PSA material according to the present invention. Supported films exhibiting at least one adhesive layer according to the present invention with a thickness of at least 200 µm are also especially preferred.

The properties of the PSA material and films according to the present invention can be optimized in view of the intended use or application within wide limits.

It was found that the swelling behaviour in water and organic solvents and the reactivatability of the PSA films mainly depend on the presence of hydrophobic silica and significantly decrease with increasing concentration of polar comonomers.

The amount of hydrophobic silica (or hydrophobic silicas) must be at least about 2 phr because below this limit, the internal mechanical strength and the handleability in terms of diecuttability, for example, was found to be insufficient in many cases. The mechanical properties of the PSA materials according to the present invention mainly depend both on the loading with hydrophobic silica and on the crosslink density. It was found that for low crosslink densities obtainable by using TPGDA in a concentration of 0.30 phr or less, the loading with hydrophobic silica preferably is at least 5 phr, in particular, not less than 10 phr and very specifically 12.5 phr or more.

The amount of hydrophobic silica is at least 2 phr, preferably at least 4 phr, in particular, not less than 5phr and very specifically not lower than 8 phr. The upper limit of the amount of hydrophobic silica of about 25 phr is due to practical reasons because it was found difficult to obtain uniform dispersions above this limit. The PSA materials according to the present invention preferably contain 4-20 phr and especially between 5-15 phr of hydrophobic silica.

The PSA materials according to the present invention preferably contain no polar comonomer component in order to obtain a high resistivity against water and organic solvents and hence a high reactivatability. In some cases, however, like, for example, for PSA materials exhibiting a high crosslink density (TPGDA concentration >1phr, especially >2 phr), high values of static shear and low values of adhesion, a small amount of polar comonomers might be added in order to improve the abrasion resistance of the PSA material. The addition of a small amount of polar monomers was found to be particularly useful in case of skid resistant materials. The concentration of the strongly polar comonomer should not exceed, however, 0.5 phr, and preferably is lower than 0.25 phr and especially preferably not more than 0.1 phr. A slightly higher amount of moderately polar comonomers of up to 1.0 phr, might be used. The amount of the moderately polar comonomer is, however, preferably less than 0.5 phr and very particularly not more than 0.25 phr.

The cohesive strength, the tensile strength, the elongation, the shear strength and the peel adhesion are interrelated and they are mainly influenced by the crosslink density, the loading with filler and the thickness of the adhesive layer.

If the crosslink density is lower than the crosslink density obtainable by about 0.4 phr of TPGDA, the PSA material typically is a rather soft mass, especially in case the loading with hydrophobic silica is less than 10 phr, and exhibits a high peel adhesion. When used as a film, this PSA material is preferably stabilized by a backing or carrier layer in order to render it diecuttable; the backing can be omitted in case the PSA material is used in form of a roll. The low crosslink density PSA material exhibits a rather high to high peel adhesion and sticks also to rather rough surfaces. To ensure sufficient internal strength and mechanical handleability, the loading with hydrophobic silica preferably is at least 5 phr, especially at least 7.5 phr and very specifically not less than 10 phr. The thickness of the adhesive layer must not be too high and is preferably not more than 1,000 µm, especially less than 500 µm and very particularly less than 250 µm.

In the PSA materials according to the present invention, the crosslink density is not lower than the crosslink density obtainable by using about 0.15 phr, preferably not lower than about 0.3 phr and very especially not lower than about 0.35 phr of TPGDA. Below the limit of 0.15 phr, the PSA material exhibits a limited internal mechanical strength which adversely affects the requirement of clean removability, dimensional stability and proper handleability, and it was found that the mechanical properties typically cannot be sufficiently improved when increasing the loading with hydrophobic silica to high levels of more than 15 phr. For crosslink densities obtainable by using TPGDA as a crosslinker in a concentration of 0.15 phr and lower, the peel strength of the PSA materials from stainless steel was often found to be too high to ensure reliable removability which is, in particular, true for medium to low fillings with hydrophobic silica of 12.5 phr and especially of 10 phr or less. Below 0.15 phr, the PSA materials furthermore often exhibit a pronounced cold flow on a surface which results in an undesirable build-up of peel strength over time, and they furthermore show an increased sensitivity against contamination, especially against contamination with organic compounds.

With increasing crosslink density, the cohesive strength of the PSA materials according to the present invention increases while peel adhesion decreases. For a crosslink density corresponding to the crosslink density obtainable by using about 0.5-1.0 phr of TPGDA, the PSA material typically sticks to itself but can be easily separated. For crosslink densities obtainable by using about 1.0 - 2.0 phr of TPGDA, the PSA material only slightly sticks to itself but still adheres well, especially to smooth surfaces such as glass, metal or plastic surfaces or to glossy paper. PSA materials with a crosslink density obtainable by using about 4.0 - 5.0 phr or more of TPGDA, are characterized by a very high shear strength and an excellent skid resistance but by a low to very low peel adhesion even on smooth surfaces. It was found that the PSA materials according to the present invention exhibit a continuous increase in shear strength with increasing crosslink density especially on smooth or relatively smooth substrates which allows, for example, the realization of skid-resistant supports which simultaneously exhibit a high shear strength and a low peel adhesion. This behaviour is surprising and is not observed, for example, for PSA materials containing cellulose fillers. These state of the art materials exhibit decreasing values of shear strength with increasing crosslink densities at a constant filler loading and therefore provide low peel adhesion/low shear stength materials.

The PSA materials according to the present invention preferably exhibit a crosslink density obtainable by using about 0.15 - 5.0 phr, particularly about 0.3- 4.0 phr and very especially about 1.0-4.0 phr of TPGDA.

The cohesive strength, the shear strength and the peel adhesion can also be influenced by varying the loading with filler and the thickness of the adhesive layer. The peel adhesion is being decreased by increasing the filler load with hydrophobic silica so that using high filler loads of at least 10 phr is preferred in case of PSA materials exhibiting a low crosslink density obtainable with TPGDA concentrations of 0.50 wt.% or less. It was further found that for a given crosslink density and filler load, the peel adhesion can be increased with increasing thickness of the adhesive layer.

Crosslink density, filler load and layer thickness can be adjusted and optimized with respect to the respective application. Some especially preferred combinations of these parameters will be discussed below. It should be noted that this discussion refers to the properties of unsupported PSA materials according to the present invention, i.e. to the PSA material as such. The person skilled in the art can use below compilation of parameter combinations as a guideline when designing specific film or tape constructions such as, for example, single-coated or double-coated films.

In the range of low crosslink density, the following combination of parameters was found to be especially useful:
- crosslink density obtainable by using a concentration of TPGDA between 0.15 and 0.5 phr, especially between 0.20 and 0.50 phr and very particularly between 0.20 and 0.40 phr
- hydrophobic silica between 10 - 25 phr, especially between 10-20 phr
- layer thickness between 50-1,000 µm

These materials are characterized by relatively high to high values of peel adhesion. They are relatively soft and stick to a great variety of surfaces from which they can be removed cleanly and reliably, especially when being supported by a backing film. The present inventors tested this specific embodiment of the PSA materials according to the present invention on numerous substrates and found that above characterization holds quite generally. The only exception was observed when using a matte-finish offset paper as a substrate from which the PSA material could not be removed without failure.

In the range of intermediate crosslink density the following combination of parameters was found to be especially useful:
- crosslink density obtainable by using a concentration of TPGDA between 0.40 and 2.0 phr
- hydrophobic silica between 5 - 16 phr, especially between 5 - 15 phr
- layer thickness between 100 - 1,500 µm

These materials are characterized by an especially advantageous combination of peel adhesion and shear strength, and they are especially suited for use on smooth surfaces such as glass, metal or plastic surfaces which optionally may be painted or otherwise coated with a smooth coating material. Due to their high shear and adhesion strength especially on smooth surfaces, they can be used, for example, for light weight mounting applications but also for a great variety of other applications. They exhibit a high internal mechanical strength and can be cleanly and reliably removed from a surface both when used as a supported or phr or more, can cleanly be removed from the matte-finish offset paper substrate mentioned above.

In the range of high crosslink density, the following combination of parameters was found to be especially useful:
- crosslink density obtainable by using a concentration of TPGDA between 2.0 and 5.0 phr
- hydrophobic silica between 2.5 - 12.5 phr, especially between 3 - 10 phr
- layer thickness between 100 - 3,000 µm

These PSA materials exhibit a low to very low peel adhesion even on smooth surfaces and are characterized by a very high shear strength on smooth surfaces, an excellent internal mechanical strength and a high to very high skid resistance.

Especially preferred are PSA materials according to the present invention exhibiting a medium crosslink level obtainable by using TPGDA in a concentration between 0.40 and 3.0 phr.

The PSA materials according to the present invention are preferably reactivatable and/or exhibit a low sensitivity towards contamination. Even after heavy contamination with dust, dirt or organic compounds etc., the surface of the PSA materials according to the present invention typically can be cleaned by applying, for example, an aqueous soap solution, lower alcohols like methanol or ethanol or acetone. The PSA layer is then typically rinsed with water and dried. The process of reactivation described is intended to be only illustrative and by no means limitative; the expert can easily give other methods without any inventive input. It was found, that the adhesion recovers even after several cycles of contamination and reactivation to a substantive to high or very high percentage with respect to the adhesion of the fresh and uncontaminated PSA layer.

The PSA materials according to the present invention are characterized by an outstanding balance of tack, peel strength, cohesive strength, shear strength, resistance against water and organic solvents, optical transparency, removability and/or reactivability and they can advantageously be used for a number of applications.

In a first preferred embodiment, the PSA material according to the present invention is used as unsupported film which when used in the form of single sheets or stripes is typically protected by two release liners while one release liner is usually sufficient when used in form of a roll. Suitable release liners are, for example, siliconized papers, siliconized polyesters, polyethylenes or polymer films treated with fluorochemicals; when using the unsupported film in form of a roll, the release liner preferably exhibits release properties on both sides with the backside typically exhibiting a lower adhesion than the front side.

Especially preferred unsupported films exhibit a thickness between 50 and 2,000 µm, in particular, between 100 and 1,500 µm and especially of at least 250 µm. The loading with hydrophobic silica preferably varies between 5 and 17.5 phr and, in particular, between 5 and 15 phr. Crosslinking densities obtainable by using a TPGDA concentration between 0.4 and 2.0 phr, in particular, between 0.4 and 1.8 phr and very specifically between 0.4 and 1.5 phr are preferred. These especially preferred unsupported films are characterized by a high cohesive strength and a medium peel adhesion. Because of the high cohesive strength, the unsupported films can be diecut, for example, 'on edge', i.e. in such a way that the diecutted parts are directly adjacent to each other with no supporting spacings being left between them. This results in a considerable reduction or even complete avoidance of waste. The supported films can be used in light-duty mounting applications on rough surfaces such as, for example, mounting a piece of paper on the wall, or in higher load mounting applications on smooth surfaces such as, for example, mounting advertising emblems on walls. Since the PSA material is transparent, transparent or translucent signs such as those made of polycarbonate or polymethylmethacrylate can be attached, for example, to glass surfaces with no glue lines or adhesive strips being visible from the front which is especially attractive from an aesthetical point of view.

Another especially preferred embodiment of unsupported films according to the invention exhibits the following properties:
- crosslink density obtainable by using a concentration of TPGDA between 0.17 and 0.4 phr
- hydrophobic silica between 10 - 20 phr
- film thickness between 50 and 2,000 µm, in particular between 100 and 1,500 µm and especially of at least 200 µm.

Another preferred embodiment of unsupported films according to the invention exhibits the following properties:
- crosslink density obtainable by using a concentration of TPGDA between 0.15 and 0.40 phr
- hydrophobic silica between 10-20 phr
- film thickness between 30 and 200 µm

Another preferred embodiment of unsupported films according to the invention exhibits the following properties:
- crosslink density obtainable by using a concentration of TPGDA between 0.35 and 1.0 phr
- hydrophobic silica between 10-20 phr
- film thickness between 200 and 1,500 µm

These unsupported films exhibit an advantageous shear strength especially on rough, embossed surfaces and can be used for mounting applications on these surfaces which can be found, for example, in display boards used in exhibitions. Display boards are available, for example, through Form & Technik, Neckartailfingen, Germany as Hardboard MDF (medium density fibre) MEWA Standard White (3.2 mm thick, PVC coated).

In another preferred embodiment of the films according to the present invention, one exposed adhesive layer is applied to each of the opposite sides of a carrier layer or backing thus forming a double-coated film with at least one of these adhesive layers comprising a PSA material according to the present invention. The other adhesive layer may also comprise a PSA material according to the present invention or another PSA material known in the art which may be removable or permanent. It should be noted that the double-coated film can comprise more than two adhesive layers which is the case, for example, when a laminated backing comprising one or more adhesive layers, is used. The term double-coated film means that the film comprises two exposed adhesive layers.

Depending on the respective application, the carrier layer or backing may be selected from a group of materials comprising polymeric films of various stiffness such as, for example, polyolefins, polyesters, polycarbonates or polymethacrylates, papers, non-wovens, laminates (such as, for example, polyethylene or polyurethane foams laminated on both sides with permanent acrylic adhesives, or papers laminated or jig-welded with polyethylene terephthalates), one part mechanical fasteners (which are described, for example, in US 5,077,870) or metals. The thickness of the carrier layer typically varies between 25 µm and 3,000 µm, preferably between 25 and 1,000 µm. The carrier material should be selected such that both layers of the adhesive bond very strongly to it. Such a choice can be made easily and does not require any inventive input from the expert. If desired, the carrier material may be treated with chemical primers or may be corona treated. The respective adhesive masses can be laminated onto the carrier sheet by means of transfer tapes in the form of cured adhesive films but it is also possible to coat the precursors of the respective adhesive layers onto the carrier layer with subsequent, for example, photochemical curing. The adhesive layers which are applied to the opposite sides of the carrier layer, may be different from each other or equal to each other. When storing the double-coated films, for example, in form of a roll or in form of sheets or stripes, these must be protected on both sides of the film with release liners. The release liners discussed above for unsupported films, can also be used for double-coated films.

Especially preferred are double-coated films comprising two exposed adhesive layers according to the invention on opposite sides of the carrier layer. In another especially preferred embodiment of double-coated films comprising two adhesive layers according to the present invention, at least one of the adhesive layers exhibits a crosslinker density obtainable by using TPGDA in a concentration of at least 0.3 phr.

In another especially preferred embodiment of double-coated films, which is to be termed as differential adhesion double-coated films, the two adhesion layers are different from each other and/or exhibit different values of peel adhesion. In a preferred embodiment of differential adhesion double-coated films, the values of 90° peel adhesion on stainless steel differ by at least 10%, especially by at least 30% and very particularly by at least 50% or more. Differential adhesion double-coated films are especially important from a practical point of view because the adhesion properties of the film can be adjusted and optimized with respect to the intended application.

A permanent, non-removable high adhesion PSA such as, for example, the acrylate based adhesives described in US Re 24,406, US 4,181,752, US 4,303,485, US 4,329,384 and US 4,330,590, rubber resin adhesives or block copolymer adhesives, may be coated on one side of the carrier sheet while the other side is coated with a removable PSA material according to the present invention which may -depending on the application- exhibit a low, medium or high crosslinking density. In another especially preferred embodiment, both sides of the double-coated film are coated with an adhesive layer containing a PSA material according to the present invention with the two PSA layers exhibiting a different crosslinker density: the higher adhesion side of the carrier sheet is coated with a PSA material having a lower crosslink density in comparison to the PSA material used on the lower adhesion side. The person skilled in the art can easily describe other embodiments without any inventive effort.

A more specific embodiment of differential adhesion double-coated films according to the invention are differential adhesion double-coated transfer films comprising at least one adhesive layer containing a PSA material according to the present invention.

The invention furthermore refers to a double-coated film bearing two exposed adhesive layers on opposite sides of the backing, at least one of the layers comprising a reactivatable and removable pressure sensitive material which exhibits an initial value of 90° peel adhesion after a dwell time of 20 minutes on stainless steel of the fresh, i.e. uncontaminated adhesive film of between 3 N/1,27 cm and 20 N/1.27 cm. The initial value of peel adhesion preferably is at least 4 N/1.27 cm and very especially at least 4.5 N/cm and preferably does not exceed 17.5 N/1.27 cm and especially preferably is lower than 15 N/1.27 cm. This specific film is useful for various mounting applications where a medium to high value of initial adhesion of the uncontaminated sample is required in order to maintain a sufficient peel adhesion after having performed one or more contamination/reactivation cycles. In a preferred embodiment of these reactivatable double-coated films, at least one of the exposed adhesive layers comprises a reactivatable pressure sensitive adhesive according to the present invention. Especially preferred are double-coated films the two exposed adhesive layers of which comprise pressure sensitive adhesive materials according to the present invention. In another especially preferred embodiment of these films, the two exposed adhesion layers are different from each other and/or exhibit different values of peel adhesion.

In the following, some specific embodiments of double-coated films according to the present invention will be described by way of example and discussed in the light of specific uses proposed for them. These examples are to be understood as explanatory and by no means as limiting the scope of the present invention. The person skilled in the art can easily describe further specific embodiments and design appropriate embodiments for specific uses.

In a first specific embodiment A of double-coated films, exposed adhesive layer 1 comprises a medium-to-low adhesion PSA adhesive material according to the present invention exhibiting a high crosslink density obtainable by using a TGPDA concentration between 1.5 and 5.0 phr and especially between 1.5 and 3.5 phr. The thickness of layer 1 preferably is between 200 and 2,000 µm and especially between 500 and 1,500 µm, and the silica loading preferably is between 5-15 phr. Adhesive layer 2 comprises a high adhesion PSA material which may be removable or permanent. Suitable permanent PSA materials are given above. A high adhesion PSA material according to the present invention preferably exhibits a crosslink density obtainable by using TPGDA in a concentration between 0.15 and 0.40 phr. Exposed layer 2 preferably exhibits a thickness between 30 and 300 µm and a silica loading between 3 - 20 phr and, in particular, between 4-15 phr. The carrier can be selected from the materials listed above but preferably is selected from the group comprising polyesters, polyethylenes, polystyrenes, polycoated papers, polymethylmethacrylates and laminates; the thickness of the carrier layer preferably varies between 20 µm and 3 mm.

This preferred double-coated film A can be used to immobilize lightweight objects such as, for example, keyboards or tape dispensers on horizontal surfaces. The high adhesion side 2 of the double-coated film is applied to the respective lightweight object while the low adhesion side 1 serves to removably and slightly adhere the object upon the surface upon which it rests, providing an improved skid resistance. The skid resistance of the low-adhesion side 1 on a typical table surface can be adjusted and optimized with respect to the respective use by varying the crosslinker level: the tape and hence the object to which it adheres, is non-slideable and practically immovable on the table when using a crosslink density obtainable by using TPGDA in a concentration between about 1.0-3.5 while it was found to be movable for higher TPGDA concentrations. In any case, the skid-resistant film can be re-adhered to the underlying surface and reactivated in case of contamination because of the excellent reactivatability of the PSA material according to the present invention.

Preferred double-coated film A can be further used, for example, for transportation and shipping of sensitive electronic components and other fragile goods. Presently, in the state of the art, large styrofoam corners are used to immobilize objects in a shipping box; the remaining space is typically filled with free-flowing styrofoam pieces. Instead of this, preferred double-coated adhesive film A can be used to immobilize the goods in the box in combination with free-flowing styrofoam pieces, for example, being still required to provide the shock-absorption function. The double-coated films according to the present invention require distinctly less space than the styrofoam corners and allow use of smaller boxes. The high adhesion side 2 of the double-coated film is preferably adhered to the transportation box so that the double-coated film remains with the packaging and releases from the goods when they are unpacked.

In another especially preferred embodiment B of double-coated films, these are especially designed, for example, for low-weight mounting applications such as, for example, as penholders, and they can also be used as a frequently reusable closure system of, for example, tobacco bags or bags of paper handkerchiefs.

In this embodiment, exposed low adhesion layer 1 comprises a PSA material according to the present invention exhibiting a crosslinker density obtainable by using TPGDA in a concentration between 0.5 and 1.5 phr and very specifically between 0.8 and 1.3 phr. The layer thickness preferably amounts to 100-1,500 µm, and the silica loading preferably is between 5 and 15 phr. This PSA material is characterized both by a high shear strength and a medium to low peel adhesion, and is thus well suited for preparing light-weight mounting devices. Exposed adhesive layer 2 comprises a high adhesion PSA material which may be removable or permanent. Suitable permanent PSA materials include but are not limited to acrylate type adhesives which are described, for example, in US Re 24,406, US 4,181,752, US 4,303,485, US 4,329,384 or US 4,330,590, rubber resin adhesives or block copolymer adhesives. Layer 2 preferably comprises a high adhesion PSA material according to the present invention which exhibits a crosslink density obtainable by using TPGDA in a concentration between 0.20 and 0.60 phr, a layer thickness between 30 and 700 µm and a loading with hydrophobic silica between 2-17.5 and especially between 5-15 phr. The carrier layer can be selected from the materials given above.

In an especially preferred embodiment of type B, layer 2 is a PSA material according to the present invention and exhibits a crosslink density obtainable by using TPGDA in a concentration between 0.15 and 0.40 phr and preferably between 0.20 and 0.40 phr, a layer thickness between 30 and 200 µm and a silica loading between 2-14 phr. Adhesive layer 2 may be laminated onto a rather stiff carrier like, for example, a thick PS foam (typically 3002,000 µm) laminated with printable paper sheets; such a carrier material is provided, for example, by Fa. Kapa, Bielefeld. This construction is especially useful for the preparation of light-weight mounting devices such as, for example, a penholder with the pens being attached to layer 1 while layers 2 fixes the construction onto the respective substrate. In a slightly modified construction of this type, exposed layer 1 is applied to a flexible sheet material which carries on its backside, for example, a permanent adhesive material to which a flexible and preferably printable substrate is applied. The backing is thus formed by the flexible sheet material, the intermediate, for example, permanent adhesive layer and the printable substrate which carries exposed adhesive layer 2. This specific and preferred embodiment B of a double-coated film can be used for the preparation of light-weight mounting devices such as especially preferred for the preparation of penholders.

In another especially preferred embodiment of type B, layer 2 is a PSA material according to the present invention which exhibits a crosslink density obtainable by using TPGDA in a concentration of between 0.3 - 0.6 phr, a layer thickness of between 50 - 600 µm and a loading with silica of typically 5-15 phr. Layer 1 is chosen as described above. The carrier layer is, for example, a PET film with a thickness of typically 30-200 µm. This construction can be used, for example, for attaching printed films of for example, polypropylene, PET or paper, onto a billboard. Layer 2 fixes the double-coated film reliably onto the billboard surface while the printed film is attached to layer 1 and can be easily removed. Other printed films can then be attached to optionally reactivated layer 1. The construction is also useful as a closure system for, for example, tobacco bags or bags for paper handkerchiefs. High-adhesion layer 2 fixes the construction onto the tab of the bag while exposed low-adhesion layer 1 allows the tab to be frequently attached to the bag and re-opened. Since the PSA material according to the present invention is rather insensitive against contamination with, for example, dust or sweat, and preferably reactivatable, the closure system offers a longer lifetime and a more convenient handling than state of the art systems.

In another preferred embodiment C of double-coated films according to the present invention, both exposed adhesive layers are reactivatable, and both of them are characterized by a high peel strength and a high cohesive strength. In an especially preferred embodiment, both exposed adhesive layers comprise a preferably reactivatable PSA material according to the present invention which preferably are designed as follows:
- layer 1:: crosslink density obtainable by a TGPDA concentration between 0.15 and 0.70 phr, more specifically between 0.15 and 0.40 phr and especially between 0.17 and 0.30 phr load with hydrophobic silica between 5-15 phr layer thickness between 50-300 µm
- layer 2:: crosslink density obtainable by a TGPDA concentration between 0.30 and 1.00 phr, especially between 0.35 and 0.50 phr load with hydrophobic silica between 5-15 phr layer thickness between 100- 500 µm

The carrier layer or backing inserted between layers 1 and 2 preferably is, for example, polyethylene terephthalate.

This specific double-coated film C can preferably be used, for example, for mounting flexoplates onto rotating cylinders in the printing industry or for mounting flexible abrasives and, in particular, flexible abrasive discs to rotatable or vibratory back-up pads typically found on orbital sanders, random orbital (dual action) grinders, stationary grinders and sanders having fixed plates etc. The invention also relates to printing devices comprising one or more rotatable printing cylinders which are mounted by means of the specific double-coated film C described above.

Flexible abrasives generally comprise a plurality of abrasive grains bonded to a flexible backing. In a preferred embodiment, the flexible abrasive comprises a backing bearing a first adhesive which is commonly referred to as make coat. Embedded into the first adhesive is a plurality of abrasive grains. Over the abrasive grains is a second adhesive, commonly referred to as size coat, which serves to reinforce the abrasive grains. In another embodiment, the flexible abrasive is a lapping coated abrasive in which an abrasive coating is bonded to a backing. The abrasive coating comprises a plurality of abrasive grains distributed throughout the binder.

Examples of typical flexible backings for use in flexible abrasives include paper, nonwoven subtrates, polymeric films, vulcanized fibers, cloths, treated versions thereof and combinations thereof. Examples of suitable binders include phenolics, urea-formaldehydes, acrylates, epoxies, urethanes, hide glues, latices and aminoplasts. The abrasive grains are preferably selected from a group of materials comprising fused alumina, heat treated alumina, ceramic alumina, silicon carbide, garnet, silicon carbide, boron carbide, diamond and cubic boron nitride.

The optimum crosslinker concentration of low adhesion layer 2 of film construction C slightly depends on the flexible backing used. When using smooth flexible backing material such as, for example, Natronkraftpapers or smooth impregnated cloths, the optimum crosslink density often corresponds to a TPGDA concentration between 0.40-0.60, more specifically between 0.40 and 0.50 and especially preferably between 0.40 and 0.45. For flexible backings with a larger (porous or fuzzy) surface such as, for example, for IMFF-films (Imperial Microfinishing Film™) or for fuzzy cloths, the optimum crosslinker density was found to correspond to a TPGDA concentration of 0.30-0.45, more particularly around 0.35. The expert can easily determine the optimum composition of the double-coated film according to the invention for each abrasive disc without any inventive input.

In a modified construction, the high adhesion layer 1 is replaced with a mechanical, interlocking fastener such as, for example, the Dual Lock™ fastener available through 3M, or the hook or loop part of a hook and loop fastener. Low adhesion layer 2 is coated or laminated onto the backside of the fastener. The resulting hybrid construction, comprising a mechanical and a chemical fastener, is fixed by means of the mechanical fastener on the respective substrate, which carries, for example, the counterpart of the hook and loop system or another Dual Lock™ fastener, while low adhesion layer 2 is exposed. The modified hybrid construction can be used, for example, for mounting a flexible abrasive disk onto the rotatable back-up pad of an abrasive system which is equipped with a suitable mechanical fastener. The mechanical fastening is occasionally advantageous, for example, when performing a wet abrading process because the abrasion fluid was sometimes observed to weaken the adhesion between layer 1 and the back-up pad.

In another embodiment it is also possible to replace low adhesion layer 2 with a mechanical interlocking fastener. High adhesion layer 1 is then coated onto the backside of the fastener, and the resulting hybrid construction can be used, for example, for cabinet drawer closures and long term hanging attachments.

Compared to conventional mounting systems for flexible abrasives or flexoplates, the mounting device according to the present invention offers a number of advantages. The device can preferably be reactivated even after heavy surface contamination. The surface can be cleaned, for example, with lower alcohols or with water and soap. As soon as the film dries adhesion recovers to a sufficient degree even after repeated cycles of contamination and reactivation. Lower contamination levels can be mechanically cleaned by attaching, for example, a non-coated smooth polyethylene terephthalate film to the contaminated PSA layer and stripping it off quickly. While conventional flexible abrasives typically exhibit an adhesive layer on their back which has to be discarded together with the disc after use, the mounting system according to the present invention accommodates flexible abrasives without an adhesive backing which considerably reduces the overall adhesive consumption. The PSA material according to the present invention exhibits a high heat resistance and allows dry grinding of materials with poor heat conductivity like stone, marble or granite. The mounting system according to the present invention thus offers convenient handleability and reduces waste.

The specific embodiment C of double-coated films described can be furthermore used for providing a lint and pet hair remover. Low adhesion layer 2 forms the exposed adhesive layer and preferably exhibits a crosslinker density obtainable by using a TPGDA concentration between 0.4 and 1.0 phr. High adhesion layer 1 and the other parameters of layer 2 are chosen as given above. The carrier layer may be formed, for example, by polyethylene terephthalate or polypropylene. Layer 1 is attached to a printed substrate which may be formed, for example, by a printed laminate comprising a printed paper layer which is jig welded between 2 polyethylene layers.

In another preferred embodiment, the PSA material according to the present invention is used to prepare single-coated films comprising one exposed adhesive layer. It should be noted that single-coated film can contain more than one adhesive layer; the term single-coated refers to the number of exposed adhesive layers. The PSA material preferably exhibits a crosslinker density obtainable by using TPGDA in a concentration between 0.4 and 2.0 phr, in particular, between 0.5 and 1.8 phr and very specifically between 0.5 and 1.5 phr, a loading with hydrophobic silica between 5 and 15 phr and a thickness between 501,500 µm and more specifically between 100-1,500 µm. This specific single-coated film exhibits both a high shear strength and a high peel adhesion. When using it in form of a roll, neither release liners nor LABs (low adhesion backsize) are required due to the removability of the PSA material which is advantageous in terms of saving costs and improving the printability of the backside. The PSA material is directly coated or laminated onto suitable carriers or backings such as, for example, biaxially oriented terephthalates, polyethylenes, PVCs, polystyrenes, polycoated papers, polycarbonates, polymethylmethacrylates, fabrics or cloths, metals foils or non-wovens. Preferred backings are polymer films which, in particular, are printable. Especially suitable backings are decorative or reflective sheeting materials. Examples of reflective sheetings are Silver Scotchcal™ films or UK5005 or 5006 reflective films which are commercially available through 3M. The adhesion of the PSA layer onto the carrier or backing can further be enhanced by chemical priming or corona treatment as was explained above. The single-coated film can be used as a temporary label, sign or decorative film.

The single-coated films described can temporarily be attached to various surfaces such as, for examples, glass or painted surfaces and can easily be removed and frequently be reapplied.

An especially advantageous embodiment of these single-coated films are temporary license plates employing reflective sheetings as backing. The license plates can be reliably attached even to relatively dirty cars, and they can preferably easily be reactivated after being removed by washing, for example with soap and water, and subsequent drying. Compared to known temporary license plates, the license plates according to the present invention are easier to handle and do not require mechanical mounting, and no frames or screws. The license plates have a longer lifetime than conventional temporary metal plates which after frequent use typically exhibit many holes due to mounting on different car models and improper handling which render them illegible. Another advantage of the license plates according to the present invention is that they can be stored without applying a liner. After having applied the PSA material according to the present invention to the sheeting with subsequent curing, the license plates are rolled up with no liner and stored. If contaminated during storage, they can preferably be reactivated by appropriate washing procedures.

Unsupported or supported films according to the present invention can also be used as vibration dampers.

Constrained layer dampers are preferred over free layer dampers since in the constrained layer damper the vibration damping material is forced to be deformed in shear as the article to which it is attached vibrates, dissipating substantially more energy than when the material deforms in extension and compression, as occurs in free layer dampers.

Constrained-layer constructions can preferably be prepared by two processes. In the first process, a layer of the unpolymerized vibration damping material is coated onto a release liner, the material polymerized, and the layer of resulting material transferred to a stiff backing and adhered thereto, thereby providing a constrained-layer construction. In the second process, al layer of unpolymerized material is coated directly onto a backing and the mixture polymerized "in-situ" to provide the constrained-layer construction. In each case, the constrained-layer construction is then affixed to the structure requiring damping. The construction may be attached in any manner provided that the constraining layer is only fixed to the vibrating structure via the vibration damping material interface, i. e. free of mechanical attachment. When the structure subsequently vibrates under the influence of an internally or externally applied force, the vibration is damped.

The PSA material according to the present invention which acts as the vibration damping material, may be adhering or non-adhering. PSA materials with medium or high values of adhesion can usually be adhered to a stiff constraining layer without the use of an additional bonding agent. However, it is sometimes necessary, to use a thin layer (e.g., 20 - 50 µm) of a high-modulus adhesive, such as, for example, an epoxy adhesive, to bond the PSA material according to the present invention to an article.

For most applications, the layer of the PSA material according to the present invention has a thickness of at least 10 µm up to about 100 µm and more preferably of at least 10 µm to 50 µm.

As mentioned above, a stiff layer is part of a constrained-layer vibration damper. A suitable material for a stiff layer has a stiffness of at least 0.40 (relative to stainless steel) as defined in "Handbook of Tables for Applied Engineering Science" ed. Bolz, R. E. et al., CRC Press, Cleveland, Ohio, page 130 (1974). The desired stiffness of the stiff layer is varied by adjusting the thickness of the layer, for example form about 25 µm to 5 cm, depending on the modulus of the stiff layer.

Examples of suitable materials include metals such as iron, steel, nickel, aluminum, chromium, cobalt, and copper, and alloys thereof and stiff polymeric materials such as polystyrene; polyester; polyvinylchloride; polyurethane; polycarbonate; polyimide; and polyepoxide; fiber-reinforced plastics such as glass fiber, ceramic fiber, and metal fiber-reinforced polyester; glasses; and ceramics.

The PSA material according to the present invention may also be used to provide a damped laminate comprising the PSA material between two constraining layers so as to yield an inherently damped structural member. Each constraining layer may have a thickness greater than about 125 µm and more preferably from about 125 to 380 µm with the thicknesses of each constraining layer being substantially equal in the most preferred embodiments. Damped laminates having more than three (e.g., five) alternating material layers and constraining layers are also possible.

The PSA materials according to the present invention are characterized by an advantageous damping performance, especially also at elevated temperatures. Vibration dampers comprising the following PSA material according to the present invention, exhibit especially advantageous damping properties over a wide temperature range, in particular also at low temperatures, i. e. at 20°C or less:
- crosslink density obtainable by a TPGDA concentration of between 0.15 and 1.0 phr, especially between 0.15 and 0.25 phr
- hydrophobic silica between 2-5 phr
- layer thickness between 10-25 microns

For a constrained layer damper using this PSA material, the constraining layers are preferably metal, for example, stainless steel, having a thickness of between 125 µm and 400 µm.

The specific embodiments of PSA materials and film constructions according to the present invention are to illustrate the invention by way of example without limiting it. Exploiting the present disclosure to its fullest extent, the person skilled in the art can describe without any inventive effort other embodiments of the PSA materials and further film constructions, and he can easily find other applications for the PSA materials according to the present invention.

The following examples are intended to illustrate the invention further. First, however, certain procedures and tests utilized in the examples, will be described.

### Test procedures

The following test procedures are used to determine physical properties of the adhesive tapes obtained in the examples. If in some cases modified test procedures are applied deviating from the test procedures as described below, this will be explicitly stated in each case.

### Static Shear

This test is based on PSTC Method PSTC-7 (Procedure A), a well-known industry standard available from the Pressure Sensitive Tape Council of Glenview, Illinois, U.S.A. All measurements of this type were made at room temperature. The adhesive layer to be tested was produced by photopolymerizing the prepolymerized precursor between two layers of silconized biaxially oriented polyethylene terephthalate (PET) film. One layer of PET was removed and replaced by a 140 µm thick layer of anodized aluminum sheet. The second layer of PET was then removed, yielding an adhesive tape with an aluminum backing which was used in the static shear test. All shear measurements were made using samples of 1.27 cm x 2.54 cm.

Shear measurements were performed on polished stainless steel (SS) exhibiting a smooth and glossy surface, polyethylene terephthalate (PET) as well as on matte and glossy paper substrates.

For SS substrates, a 1.27 cm wide strip of tape prepared by the method just described was adhered to a flat, rigid, stainless steel plate with an exactly 2.54 cm length of tape in contact with the panel. The total bonded area was then 1.27 cm x 2.54 cm. Before testing, a 1,000 g weight rested over the bonded area for 15 minutes (differs from the PSTC method where a rubber-coated roller was used to bond the samples to the panel). Then the panel with the adhered tape test sample was placed in a special stand tilted at two degrees from vertical for 10 minutes. Then a weight of either 250 or 500 g (the actual weight is specified in the examples) was hung from the free end of the tape. The time required for the weight to fall is the Static Shear Value in minutes. If no failure occured in 10,000 minutes, the test was discontinued.

The test was accordingly performed for PET substrates (50 µm of Scotchpar™ film, available through 3M).

With respect to paper, the stainless steel panel was covered either by copy paper (HP "E" white, 80 g/m², Fa. Neusiedler), by a matte finished offset paper (115 g/m², Fa. Zanders) or by glossy paper (115 g/m², Ikonorex) and a weight of 500 g was used. The paper was bonded to the panel with the film-backed double-coated adhesive tape 419 of 3M.

### 90 or 180 degree Peel Adhesion

A modified version of PSTC Method PSTC-3 which is available from the Pressure Sensitive Tape Council of Glenview, Illinois, U.S.A., was used. The peel measurements were made both for 90 and 180 degree and an anodized aluminum film was substituted for the polymeric film backing normally used for this test. All peel adhesion measurements are given in Newton/1.27 cm.

The adhesive layer to be tested was produced by photopolymerizing the prepolymerized precursor between two layers of silconized biaxially oriented polyethylene terephthalate (PET) film. This laminate was cut to a width of 1.27 cm. After removal of one layer of PET, the adhesive was adhered to a smooth stainless steel plate. The second layer of PET was removed and a 1.60 cm wide, 140 µm thick anodized aluminum strip was adhered to the adhesive under a weight of 6.8 kg hard rubber-covered steel roller with 1 pass in each direction. The values of the examples are each determined from three measurements.

For the adhesion measurements, stainless steel (SS), glass, polypropylene (smooth and glossy surface finish), matte finish paper and glossy paper were used as substrates. The values of 90 and 180 degree peel adhesion were measured after 20 minutes and 3 days dwell time, respectively, at room temperature by moving the free end of the aluminum strip away from the respective substrate by 90 or 180 degree, respectively, and at rate of 305 mm per minute using a tensile tester.

### Tensile Strength at Break/Elongation at Break

Tensile and elongation were measured according to German Industry Standard DIN 53455 except that the test tape which forms the inner part of a bone-shaped test specimen (between the two thickenings at the ends) was 6.35 mm wide and had a length of 50.8 mm.

The tests were performed using unsupported layers of pressure sensitive adhesive which were prepared by photo-polymerization between two transparent polymeric fims as described previously. No polymeric film backing or aluminum substrate was used for the adhesive layer in the tensile and elongation test.

The adhesive sample was cut to width of 6.35 mm and a length of about 50.8 mm. The thickened ends of the bone-shaped specimen were protected with masking tape and fixed to the clamps of a tensile tester. The distance of the clamps was adjusted to 70 mm. The sample was torn with a speed of the upper clamp of the tensile tester of 305 mm per minute. Tensile strength was recorded as the force required at break of the sample in units of Newtons per square millimeter (N/mm²).

Elongation was recorded as length of the sample at break compared to the original sample length of 70 mm. The units of elongation at break are %.

### Reactivatability

The reactivatability was determined via the comparison of 90 degree peel adhesion measurements performed for uncontaminated adhesive layer and adhesive layers contaminated in a defined way, respectively.

The adhesive layer to be tested was produced by photopolymerizing the prepolymerized precursor between two layers of siliconized biaxially oriented polyethylene terephthalate (PET) film. This laminate was cut to a width of of 1.27 cm. After removal of one layer of PET, the adhesive was adhered to a smooth stainless steel plate. The second layer of PET was removed and a 1.60 cm wide, 140 µm thick anodized aluminum strip was adhered to the adhesive under a weight of 6.8 kg hard rubber-covered steel roller with 1 pass in each direction. The 90 degree peel adhesion for the uncontaminated sample was measured after 20 minutes dwell time at room temperature by moving the free end of the aluminum strip away from the stainless steel plate at 90 degree and at rate of 305 mm per minute using a tensile tester, as was described above. The values of the examples are each determined as the average value from two measurements.

In a first series of contamination experiments hereafter referred to as method I, TiO₂ powder was applied to the surface of the adhesive layer to be tested. The adhesive layer was then treated with 1 g of liquid soap (Kosmetische Waschlotion of Fa. Cleaner Lesko GmbH, Elmshorn) for 15 sec, rinsed with water for 15 sec and dried at 70 °C. The treatment was repeated, and the peel adhesion was measured after 10 contamination and washing cycles, following the procedure outlined above.

In a second series of contamination experiments hereafter referred to as method II, the surface of the adhesive layer to be tested was treated with about 200 mg of a cosmetic creme (Stokolan of Fa. Stockhausen), and washed with an aqueous soap solution and rinsed with water as described above. The peel adhesion was measured after 10 contamination and washing cycles, following the procedure outlined above.

### Examples

### Examples 1-21

A mixture of 0.04 pph of Irgacure 651 (commercially available through Ciba-Geigy) and 100 parts by weight of isooctylacrylate (IOA) was partially polymerizd by UV light to form a syrup of a coatable viscosity of about 2,000 mPas. Then various amounts of hydrophobic silica, tripropyleneglycoldiacrylate (TPGDA) and, in each case, 0.2 phr of Irgacure 651 (commercially available through Ciba-Geigy) were added to the syrup followed by mixing with a lab stirrer for 90 minutes. For 3 amounts of hydrophobic silica (5.0, 7.5 and 10 phr), the concentration of TPGDA was varied between 0.17 and 1.00. The coating and curing of the syrup were performed between two transparent siliconized polyester films. The level of radiation dosage was about 1,300 mJ/cm². The radiation was supplied from lamps having about 90% of the emissions between 300 and 400 nm, and a peak emission at 351 nm. The thickness of the adhesive samples was chosen to be 800 µm.

The following properties of the adhesive samples which were measured as described above, are listed in table 1:
- 90° peel adhesion from copy paper and stainless steel, in each case after a dwell time of 20 minutes and 3 days, respectively
- static shear from copy paper and from a painted metal surface (painted with an automotive paint obtained from Ford Comp.)
- tensile strength at break
- elongation at break

### Examples 22-33

In this series of experiments, adhesive samples were obtained according to the method used in example 1 except that the amount of hydrophobic silica was kept constant at a value of 10 phr while the concentration of tripropyleneglycoldiacrylate was varied between 0.2 and 5.0 phr.

The following properties of the adhesive samples which were measured as described above, are listed in table 2:
- 90° peel adhesion from matte-finish offset paper and glossy paper, respectively
- static shear from stainless steel, biaxially oriented polyethylene terephthalate, matte-finish offset paper and glossy paper

### Examples 34-36

In this series of experiments, adhesive samples were obtained according to the method of example 1 except that the amount of hydrophobic silica was kept constant at 10 phr while the concentration of tripropyleneglycoldiacrylate was adjusted to be 0.35, 0.50 and 1.0, respectively.

The following properties of the adhesive samples which were measured as described above are listed in table 3:
- 90° peel adhesion from stainless steel after a dwell time of 20 minutes without contamination and after 10 cycles of contamination and reactivation according to method I and II, respectively.

### Comparative Example 1

In this experiment, an adhesive sample was prepared according to the method of example 1 except that acrylic acid was added as a polar comonomer with the mass ratio of acrylic acid to isooctylacrylate amounting to 10/90. The amount of tripropyleneglycoldiacrylate was adjusted to 1.0 phr, and the concentration of hydrophobic silica was 10 phr.

For this adhesive sample, the same properties as for the adhesive samples of examples 34-36 were determined; they are listed in table 3.

### Comparative Example 2

In this experiment, an adhesive sample was prepared according to the method of example 1 except that 4 pph of hydrophilic silica (Aerosil R200, commercially available through Degussa, Hanau) was used as filler component instead of hydrophobic silica Aeorosil R972. The amount of tripropyleneglycoldiacrylate was chosen to be 0.5.

For this adhesive sample, the same properties as for the adhesive samples of examples 34-36 were determined; they are listed in table 3.

### Comparative Example 3-4

In this series of experiments, adhesive samples were prepared according to the method of example 1 except that 10 and 40 phr, respectively, of the cellulose powder Technocell30/2 (commercially available through Cellulose Füllstoffabrik, Mönchengladbach) were used as filler component instead of hydrophobic silica and that 0.2 phr of Permalink 1:4 printing paint (commercialy available through Sicpa Druckfarben, Backnang) were added to the precursor of the PSA. The amount of tripropyleneglycoldiacrylate was chosen to be 0.5.

For this adhesive sample, the same properties as for the adhesive samples of examples 34-36 were determined; they are listed in table 3.

### Examples 37-38

In this series of experiments, adhesive samples were obtained according to the method used in example 1 except that the amount of hydrophobic silica and tripropyleneglycoldiacrylate, respectively, were kept constant at values of 10 phr and 0.27 phr, respectively, the radiation energy was varied between 500-1,300 mJ/cm².

The following properties of the adhesive samples which were measured as described above, are listed in table 4:
- 180° peel adhesion from stainless steel, polypropylene and glass, respectively, after a dwell time of 20 minutes
- static shear from stainless steel, polypropylene and glass, respectively, at weight loads of 250 and 500 g, respectively
- tensile at break
- elongation at break

### Comparative examples 5-6

In this series of experiments, adhesive samples were obtained according to the method used in examples 37 and 38 except that no hydrophobic silica was added.

For these adhesive samples, the same properties as for the adhesive samples of examples 35-36 were determined; they are listed in table 4.

### Examples 39-40

In this series of experiments, adhesive samples were obtained according to the method used in example 1 except that the amount of hydrophobic silca was kept constant at a value of 10 phr while the concentration of tripropyleneglycoldiacrylate was chosen to be 0.47 and 0.62, respectively.

The following properties of the adhesive samples which were measured as described above, are listed in table 5:
- 90° peel adhesion from copy paper and stainless steel, respectively, after dwell times of 20 minutes and 3 days, respectively
- static shear from copy paper and a painted metal surface (painted with an automotive paint obtained by Ford Comp.), respectively
- tensile strength at break
- elongation at break

### Comparative examples 7-8

In this series of experiments, adhesive samples were obtained according to the method used in examples 39 and 40 except that no hydrophobic silica was added.

For these adhesive samples, the same properties as for the adhesive samples of examples 39-40 were determined; they are listed in table 5.

### Examples 41-52

Backing films of various materials and thicknesses were coated or laminated on one side with an adhesive prepared according to the method of example 1. The composition of the precursors of this layer which hereafter will be referred to as layer I, is specified in table 6.

The following backing materials were used:
- polyethylene (PE) foam tape (0.8 mm and 1.6 mm thick, available through 3M as PE foam tapes 9528 and 9529, respectively)
- polyester film (40 µm thick), commercially available through ICI
- polymethylmethacrylate film (PMMA, 2.0 mm thick), commercially available through Fa. Röhm, Darmstadt
- polyethylene terephthalate film (PET, 12 µm thick), commercially available through ICI
- biaxially oriented polypropylene (BOPP, 40 µm thick), commercially available through Mobile Corp.
- linear low-density polyethylene (LLDPE, 125 µm thick), commercially available through British Visqueen
- size-coated offset paper (70 µm thick), commercially available through Zanders Papierwerke, Germany

Layer II is an adhesive layer prepared according to example 1 (Examples 41-44), an adhesive layer prepared according to comparative example 3 (Examples 45-49), an Acrylate A30 (commercially available through 3M), a synthetic rubber R40 layer (commercially available through 3M) or a rubber-resin PSA (comprising 100 parts of Kraton 1011, provided by Shell, and 100 parts of Escorez 1310, provided by Esso).

### Examples 53-55

In this series of examples, adhesive samples were obtained according to the method used in example 1 except that the pre-polymerization was stopped at a lower conversion to give a viscosity of about 400 cps. The amount of hydrophobic silica was chosen to be 13.5 and 20 pph, and the concentration of tripropyleneglycoldiacrylate was 0.3 and 0.4 pph, respectively.

The following properties of the adhesive samples which were measured as described above, are listed in table 7:
- 90° peel adhesion from stainless steel and glossy paper, respectively
- static shear (for 500 g) from stainless steel and copy paper
- tensile strength and elongation

### Examples 56-58 and Comparative Examples 9-10

In this series of examples, adhesive samples were obtained according to the method used in example 1. The amount of hydrophobic silica was kept constant at 2 pph while the concentration of tripropyleneglycoldiacrylate was varied between 0.1 and 0.5.

The following properties of the adhesive samples which were measured as described above, are listed in table 8:
- 90° peel adhesion from stainless steel and polypropylene (PP), respectively
- static shear (for 250 g and 500 g, respectively) from stainless steel and polypropylene, respectively
- tensile strength and elongation

### Example 59

A differential adhesion, removable, double-coated adhesive tape is prepared according to the method of example 41. The precursors of layer I and II have the following composition:

| | **IOA** pph | **Irgacure** pph | **A/R972** pph | **TPGDA** pph |
|---|---|---|---|---|
| **Layer I** | 100 | 0.2 | 10.0 | 0.2 |
| **Layer II** | 100 | 0.2 | 10.0 | 0.4 |

Polyethylene terephthalate (50 µm) is used as a backing layer.

The double-coated tape obtained was applied to a Stikit™ Disc Pad PN05575 (diameter 125 mm, obtainable through 3M) and mounted to a random orbital abrasive machine (Dynabrade 57018). The following flexible abrasives were applied to the double-coated tape subsequently to evaluate adhesion of typical abrasives to the double-coated tape of the invention:
- Polyester Cloth Backing, X/Y weight, in which the polyester cloth had a phenolic/latex saturant and presize and a phenolic/latex/silica fillerbacksize
- ILF (3 mil polyester film coated with a layer of abrasive minerals, Imperial Lapping Film™, commercially available through 3M)
- IDLF (1-3 mm polyester film coated with a layer of diamond minerals, Imperial Diamond Lapping Film™, commercially available through 3M)
- Kraft-papers
- Waterproof papers
- IMFF (3-5 mil polyester film coated with a layer of abrasive minerals, Imperial Microfinishing Film™, commercially available through 3M)
- Polyester/cotton cloth J wt, in which the cloth had a phenolic/latex presize and a glue/starch backsize
- Polyester/cotton cloth, X wt, in which the cloth had a phenolic/latex presize and a glue/starch backsize

The first 5 flexible abrasive classes enumerated showed a good to excellent adhesion on the double-coated tape while the adhesion of the last three flexible abrasive classes was inferior to the first 5 materials but still acceptable.

All abrasive discs enumerated were used to abrade wood, steel and stainless steel up to the abrasive endpoint. The temperature resistance of the double-coated tape was excellent even under severe load (off hand sanding with portable tool).

After having abrased 10 flexible abrasive disc to the endpoint the exposed layer of the double-coated tape was purposely contaminated once with dust and workpiece material swarf. The exposed layer of the double-coated tape was then washed with an aqueous soap solution or methanol, respectively, rinsed with water and dried. Then another 10 flexible abrasive discs were applied to the double-coated tape, abrased to the endpoint and reactivated as described above. The process was repeated for 48 times.

It was found that the adhesion of the double-coated tape recovered to a practically sufficient level as soon as the exposed surface of the double-coated film dried. It was found that at least 500 flexible abrasive discs could be mounted in each case easily, and no differences were observed in the properties of the abrasive system.

### Example 60

The rubber surface of a sponge rubber back up pad for stone/marble (commercially available through Graf GmbH, Düsseldorf) was sanded away using 3M472L 40mic IMFF (commercially available through 3M) until a smooth and even surface was obtained. The double-coated tape of example 59 was applied to this modified back-up pad, and the tests according to example 59 were run.

The dry abrasive system showed an excellent behaviour with respect to heat resistance and reactivatability.

### Example 61

Differential adhesion, removable, double-coated adhesive films are prepared according to the method of example 39. The IOA, Irgacure and A/R972 concentration are chosen in each case as follows

| | **IOA** pph | **Irgacure** pph | **A/R972** pph |
|---|---|---|---|
| **Layer I** | 100 | 0.2 | 10.0 |
| **Layer II** | 100 | 0.2 | 10.0 |

while the TPGDA concentration is adjusted in 4 different experiments (a)-(d) as follows:

| **Exp.** | **Layer I** pph | **Layer II** pph |
|---|---|---|
| (a) | 0.3 | 0.3 |
| (b) | 0.25 | 0.47 |
| (c) | 0.3 | 0.6 |
| (d) | 0.3 | 0.7 |

Polyethylene terephthalate (50 µm) is used as a backing layer.

Layer I of the double-coated film obtained was applied to a Stikit Disc Pad PN05575 (diameter 125 mm, obtainable through 3M) and mounted to a random orbital abrasive machine (Dynabrade 57018). The following flexible abrasive discs A-D were subsequently applied to layer II of the double-coated film:
- A:: 3M 241 Resinite Abrasive Paper (commercially available from 3M)
- B:: 3M 210A Resin Bond Jwt Abrasive Cloth with fuzzy surface (commercially available from 3M)
- C:: 3M 272L Resin Bond Abrasive Film (as IMFF-film, commercially available from 3M)
- D:: 3M 361A Resin Bond Xwt Abrasive Cloth (commercially available from 3M)

The adhesion of exposed layer II was qualitatively assessed using a scale from 1-8:
- 1:: adhesion too high, abrasive disc hardly to remove from layer II
- 2.: very good adhesion
- 3.: very good - good adhesion
- 4.: good adhesion
- 5.: good to sufficient adhesion
- 6.: sufficient adhesion
- 7.: sufficient to poor adhesion
- 8.: poor adhesion

The adhesion was assessed in the following states or after the folowing treatments, respectively:
(i) in the virgin state, i.e. prior to any contamination

| **Abrasive disc** | **Composition of layer II** | | | |
|---|---|---|---|---|
| | (a) | (b) | (c) | (d) |
| A | 1 | 1 | 2 | 4 |
| B | 4 | 4 | 6 | 6 |
| C | 2 | 2 | 4 | 5 |
| D | 2 | 2 | 4 | 4 |

(ii) after a contamination with fingerprints without reactivation

| **Abrasive disc** | **Composition of layer II** | | | |
|---|---|---|---|---|
| | (a) | (b) | (c) | (d) |
| A | 2 | 2 | 4 | 4 |
| B | 6 | 6 | 8 | 8 |
| C | 4 | 4 | 7 | 7 |
| D | 2 | 2 | 4 | 4 |

(iii) after a contamination with Fe powder and wood powder and subsequent reactivation (treatment with 1 ml of aqueous soap for 30-45 sec., rinsing with water and subsequent drying with pressurized air)

| **Abrasive disc** | **Composition of layer II** | | | |
|---|---|---|---|---|
| | (a) | (b) | (c) | (d) |
| A | 1 | 2 | 2 | 4 |
| B | 4 | 4 | 6 | 7 |
| C | 4 | 4 | 5 | 5 |
| D | 2 | 2 | 3 | 3 |

(iv) after 10 cycles of contamination and reactivation as described in (iii)

| **Abrasive disc** | **Composition of layer II** | | | |
|---|---|---|---|---|
| | (a) | (b) | (c) | (d) |
| A | 1 | 2 | 2 | 2 |
| B | 4 | 4 | 6 | 8 |
| C | 4 | 4 | 5 | 5 |
| D | 2 | 2 | 3 | 3 |

(v) For composition (b) of adhesive layer II, additional 15 cyles of contamination and recycling according to (iii) were performed. The result of the subsequent assessment of adhesion was identical to that obtained after 10 cycles in (iv).

### Example 62

UK6006 reflective sheeting (containing a PET backing, commercially available through 3M, UK) which was printed with a thermal transfer system, was coated with an adhesive layer following the method of example 1. The precursor of the adhesive layer had the following composition:
- 100 pph IOA
- 10 pph A/R972
- 0.52 pph TPGDA
- 0.2 pph Irgacure

The thickness of the adhesive layer was adjusted to be 800 µm.

The adhesive-coated reflective sheeting was subsequently applied to 10 car bodies on a parking lot which were randomly chosen and ranged from fairly clean to relatively dirty. After its removal from a car body and prior to its application to the next, the adhesive layer was treated with an aqueous soap solution, rinsed with water and dried. No significant deterioration of the adhesion performance of the adhesive-coated reflective sheeting was observed during above procedure.

### Examples 63

Example 62 was repeated except that the adhesive thickness layer was 600 µm and that the UK6006 reflective sheeting had an additional PMMA (polymethylmethacrylate) top film over the printing.

As in example 62, no significant deterioration of the adhesion performance of the adhesive-coated reflective sheeting was observed during the repetitive mounting, dismounting and reactivation procedure.

### Examples 64

Example 62 was repeated except that UK5006 reflective sheeting (no PET backing, commercially available through 3M, UK) was used and that the thickness of the adhesive layer was 400 µm.

As in example 62, no significant deterioration of the adhesion performance of the adhesive-coated reflective sheeting was observed during the repetitive mounting, dismounting and reactivation procedure.

### Examples 65

Example 64 was repeated except that the thickness layer of the adhesive was 600 µm and that the UK5006 reflective sheeting had an additional PMMA (polymethylmethacrylate) top film over the printing.

As in example 64, no significant deterioration of the adhesion performance of the adhesive-coated reflective sheeting was observed during the repetitive mounting, dismounting and reactivation procedure.

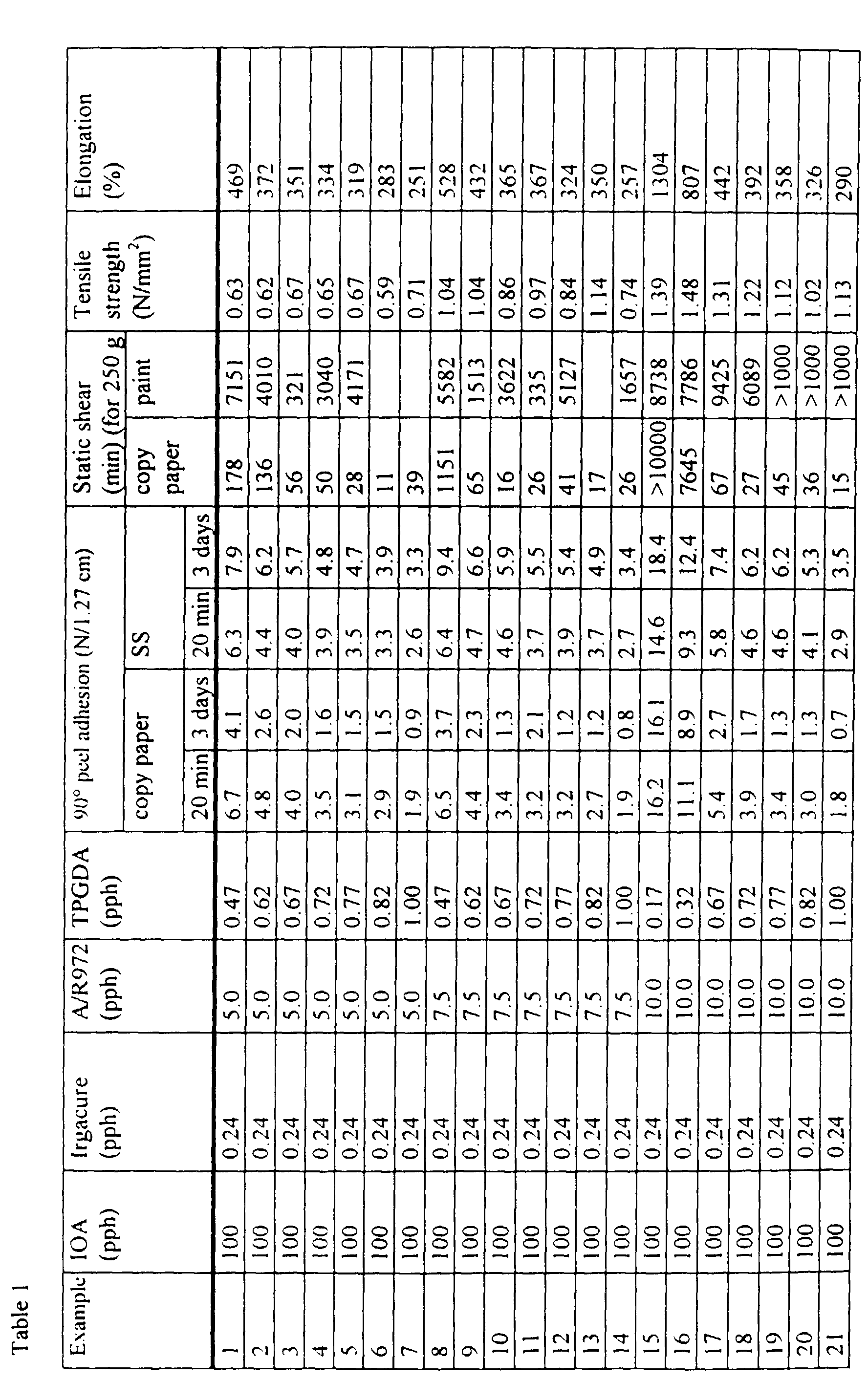

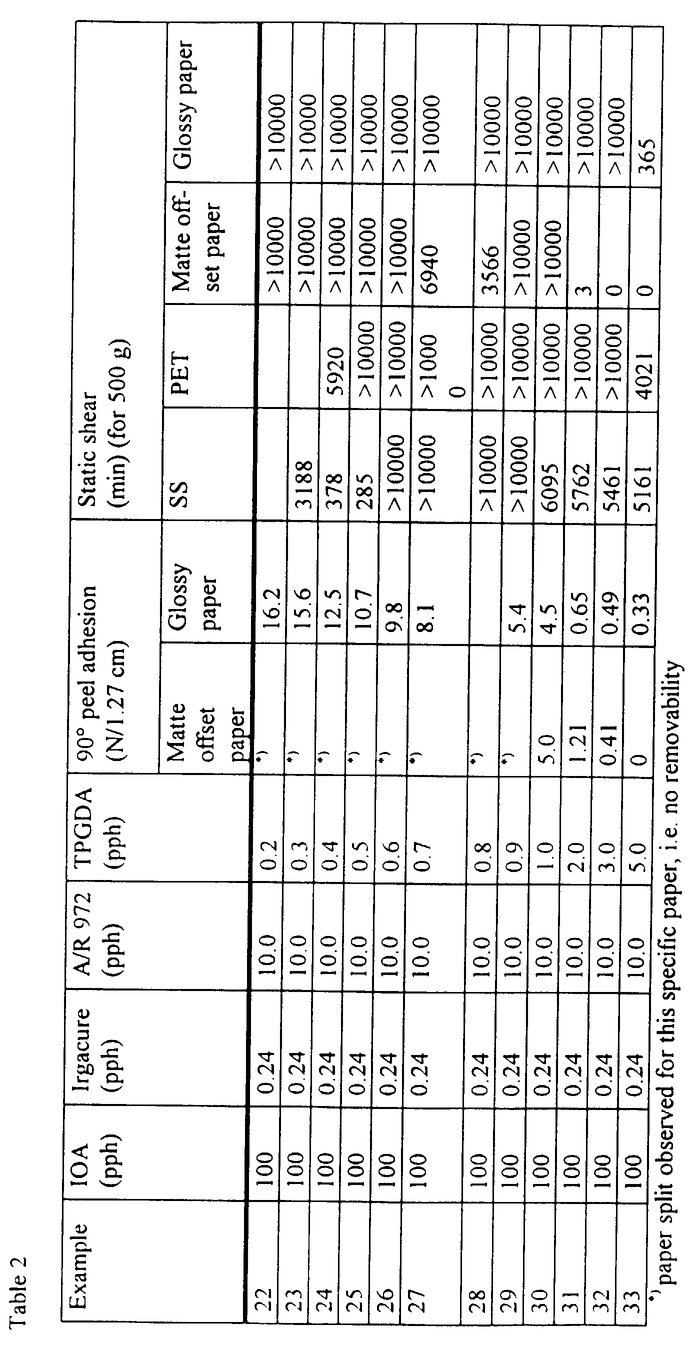

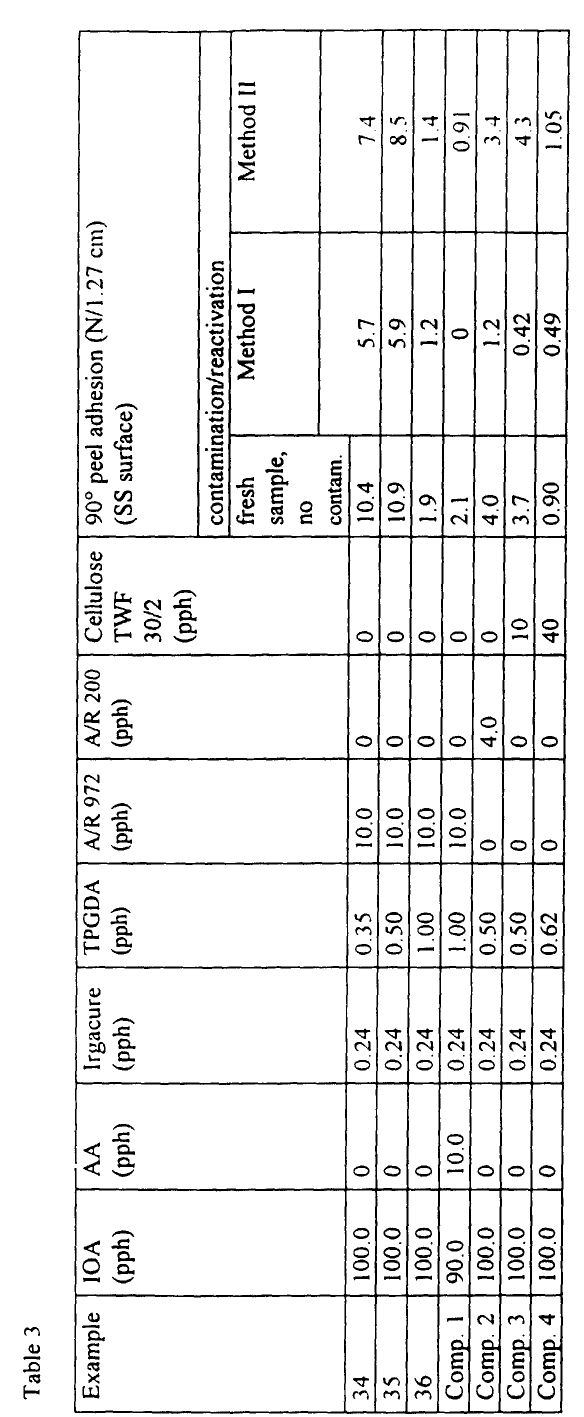

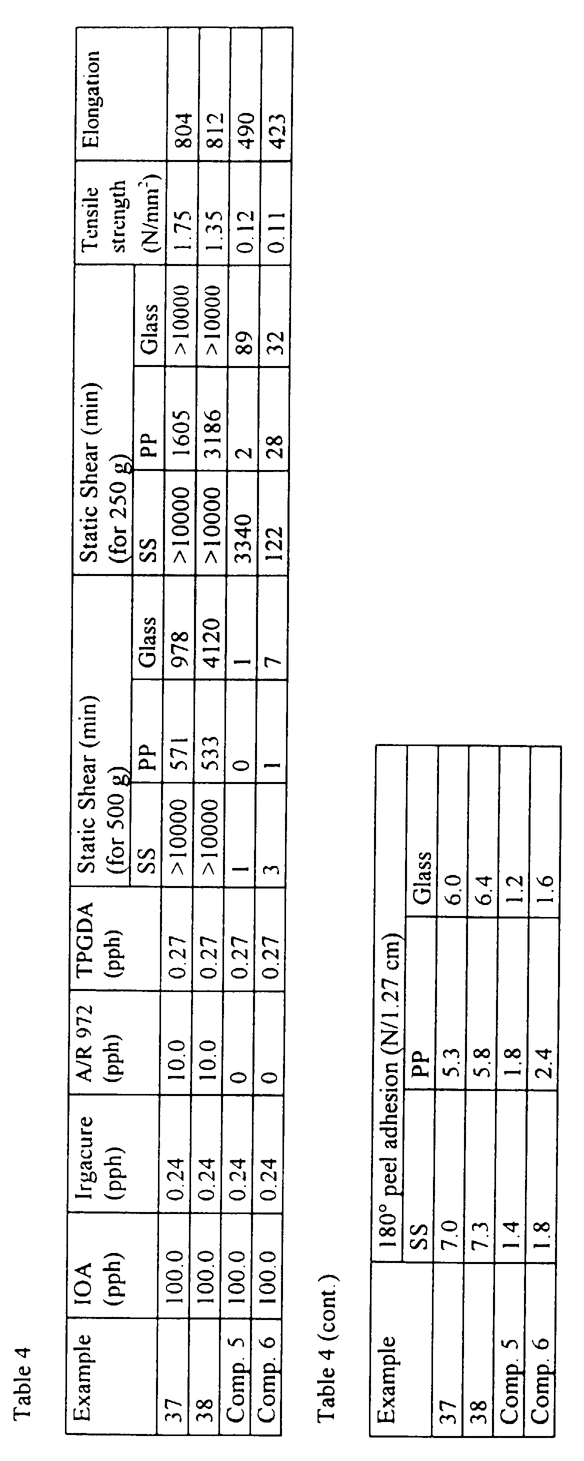

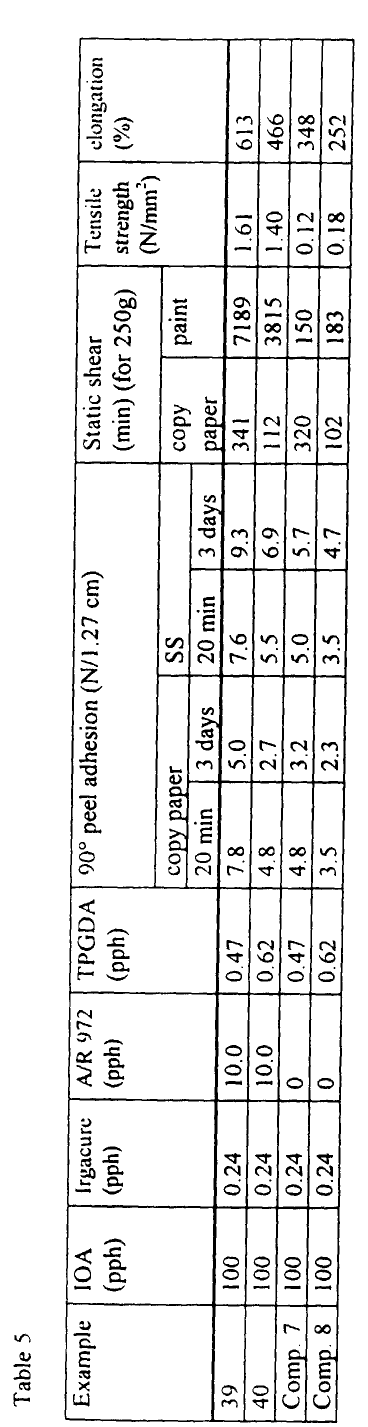

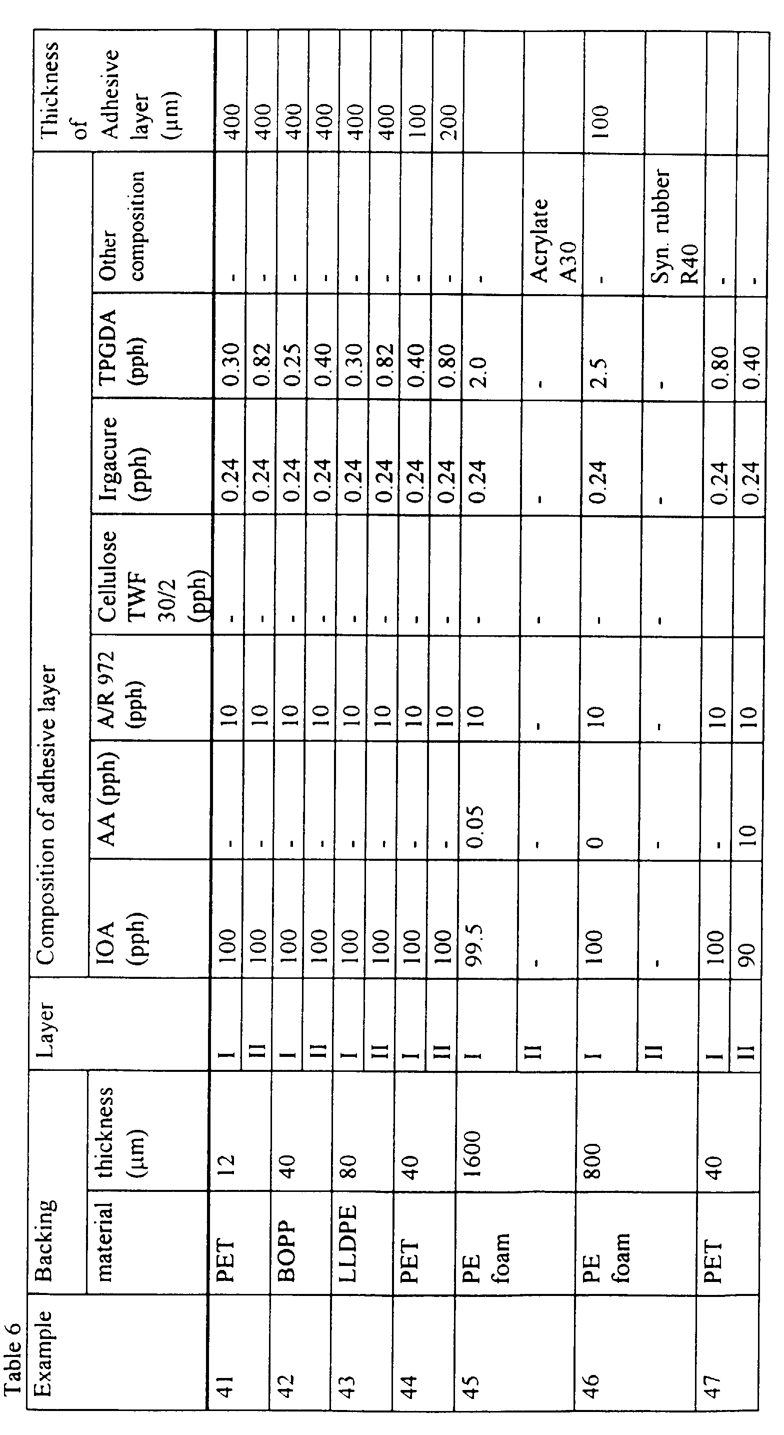

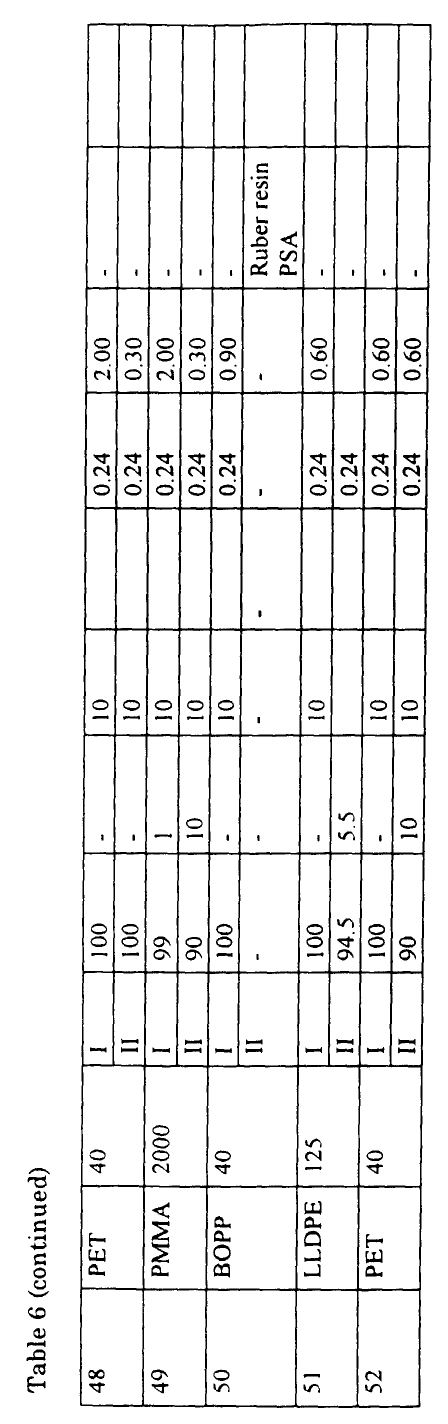

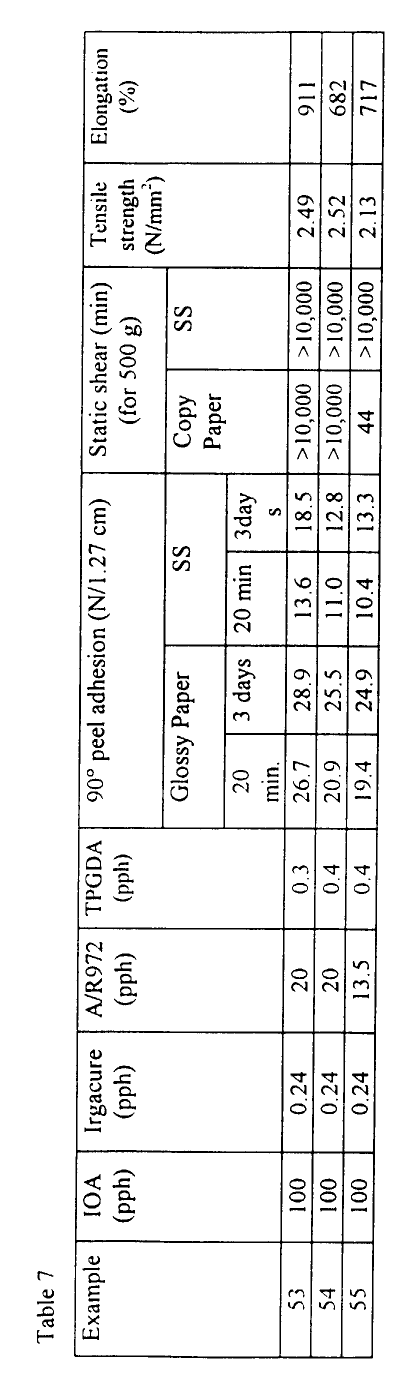

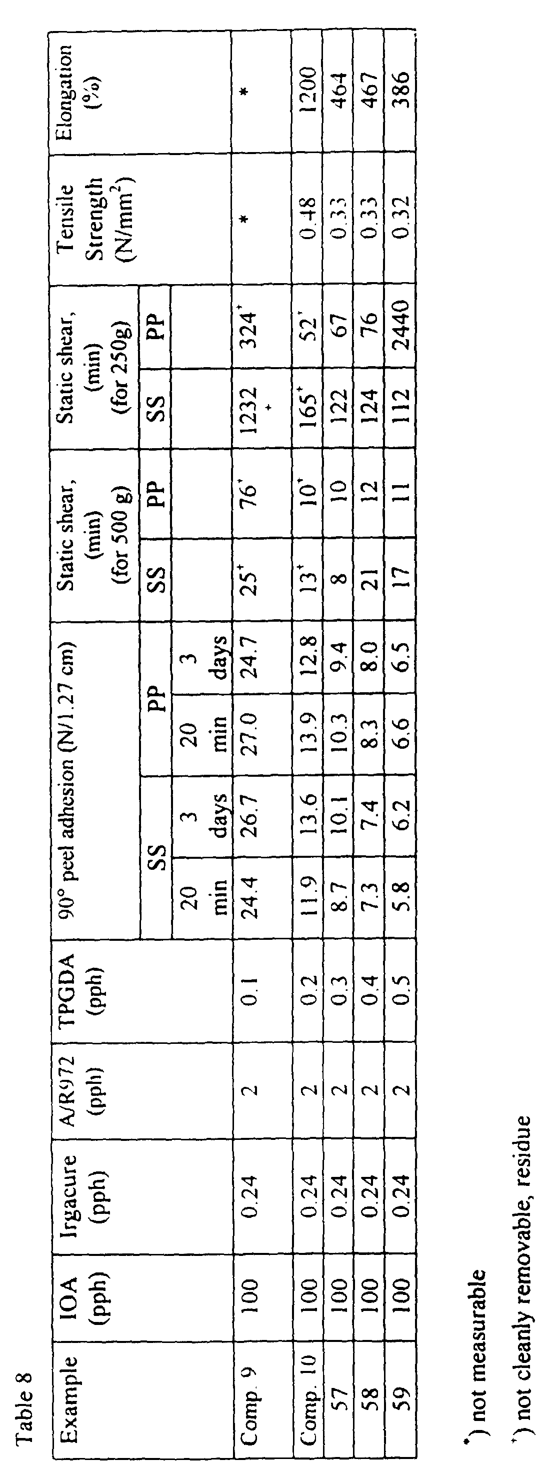

## Claims

1. Removable and/or reactivatable, transparent pressure sensitive adhesive obtainable by polymerizing a precursor comprising a monomer component which contains one or more alkyl acrylates, the alkyl groups of which have an average of 4-14 C atoms, and which is essentially free from polar comonomers, said precursor further comprising at least about 2.0 phr of hydrophobic silica, one or more polymerization initiators and one or more crosslinker compounds in a concentration resulting in a crosslink density obtainable by using tripropyleneglycoldiacrylate as a reference crosslinker compound in a concentration of 0.15 phr or more.

2. Pressure sensitive adhesive according to claim 1 wherein the surface area of the hydrophobic silica is at least 10 m²/g.

3. Pressure sensitive adhesive according to claim 1 or 2 containing between 4 and 25 phr of hydrophobic silica.

4. Pressure sensitive adhesive according to claims 1-3 containing no polar comonomers.

5. Pressure sensitive adhesive according to claims 1-4 containing one or more crosslinkers in a concentration to give a crosslink density obtainable by using tripropyleneglycoldiacrylate in a concentration of 0.30 phr or more.

6. Pressure sensitive adhesive according to claims 1-4 containing one or more crosslinkers in a concentration to give a crosslink density obtainable by using tripropyleneglycoldiacrylate in a concentration of 1.0 phr or more.

7. Pressure sensitive adhesive according to claims 1-5 wherein the concentration of the alkyl acrylates with respect to the mass of the precursor of the pressure sensitive adhesive is 75 wt.% or more.

8. Pressure sensitive adhesive according to claims 1-7 containing one or more adjuvants selected from a group comprising chain transfer agents, solvents, fire retardants, pigments, colorants, paints and odor masking agents.

9. An unsupported film which comprises the pressure sensitive adhesive according to claims 1-8.

10. An unsupported film according to claim 9 the thickness of which is between 30-200 µm and the pressure sensitive adhesive of which contains hydrophobic silica in an amount between 10-20 phr and exhibits a crosslink density obtainable by using tripropyleneglycoldiacrylate in a concentration between 0.15 and 0.40 phr.

11. An unsupported film according to claim 9 the thickness of which is between 200-1,500 µm and the pressure sensitive adhesive of which contains hydrophobic silica in an amount between 10-20 phr and exhibits a crosslink density obtainable by using tripropyleneglycoldiacrylate in a concentration between 0.35-1.0 phr.

12. An unsupported film according to claim 9 the thickness of which is between 100-1,500 µm and the pressure sensitive adhesive of which contains hydrophobic silica in an amount between 5-12.5 phr and exhibits a crosslink density obtainable by using tripropyleneglycoldiacrylate in a concentration between 0.40 and 2.0 phr.

13. An unsupported film according to claim 9 the thickness of which is between 500-3,000 µm and the pressure sensitive adhesive of which contains hydrophobic silica in an amount between 2.5-12.5 phr and exhibits a crosslink density obtainable by using tripropyleneglycoldiacrylate in a concentration between 2.0 and 3.0 phr.

14. Use of an unsupported film according to claim 11 for mounting applications.

15. An unsupported film according to claim 9 the thickness of which is between 50 and 2,000 µm and the pressure sensitive adhesive of which contains hydrophobic silica in an amount between 10-20 phr and exhibits a crosslink density obtainable by using tripropyleneglycoldiacrylate in a concentration between 0.17 and 0.40 phr.

16. A supported film comprising a backing bearing at least one exposed adhesive layer or at least one exposed adhesive layer on each of the two sides of the backing thus forming a single-coated or a double-coated film, the exposed adhesive layer in the single-coated film and at least one of the exposed adhesive layers in the double-coated film being a pressure sensitive adhesive according to claims 1-8.

17. A supported film according to claim 16 the backing of which is selected from a group of materials comprising polyolefins, polyesters, polycarbonates, polymethacrylates, papers, non-wovens, laminates, mechanical fasteners, metals, fabrics or cloths.

18. A supported film according to claims 16-17 the backing of which exhibits a thickness between 50 µm and 3,000µm.

19. A supported film according to claims 16-18, the backing of which is subjected to chemical primers or corona treatment.

20. A double-coated film according to claims 16-19 wherein the values of 90° peel adhesion of the two exposed adhesive layers on stainless steel after a dwell time of 20 minutes at room temperature differ by at least 10%.

21. A double-coated film comprising a backing bearing at least one exposed adhesive layer on each of the opposite sides of a backing wherein at least one of the layers is a reactivatable and removable pressure sensitive adhesive which exhibits a value of 90° peel adhesion of the uncontaminated virgin pressure sensitive adhesive layer on stainless steel after a dwell time of 20 minutes at room temperature of between 3 N/1.27 cm and 20 N/1.27 cm.

22. A double-coated film according to claim 20 comprising at least one exposed pressure sensitive adhesive according to claims 1-8.

23. A double-coated film according to claims 16-22, wherein one of the exposed adhesive layers is a pressure sensitive adhesive according to claims 1-8, exhibiting a crosslink density obtainable by using a tripropylene-glycoldiacrylate concentration between 1.5 and 5.0 phr, a loading with hydrophobic silica between 5-15 phr and a layer thickness of 200-2,000 µm.

24. A double-coated film according to claim 23, wherein the other exposed adhesive layer comprises a non-removable pressure-sensitive adhesive or a pressure sensitive adhesive layer according to claims 1-8 exhibiting a crosslink density obtainable by using a tripropyleneglycoldiacrylate concentration between 0.15 and 0.40 phr, a loading with hydrophobic silica between 2-12.5 phr and a layer thickness between 30 and 300 µm.

25. Use of the supported films according to claims 23-24 as skid-resistant pads or for immobilizing goods during transportation.

26. A double-coated film according to claims 16-21, wherein one of the exposed adhesive layers is a pressure sensitive adhesive according to claims 1-8, exhibiting a crosslink density obtainable by using a tripropylene-glycoldiacrylate concentration between 0.5 and 1.5 phr, a loading with hydrophobic silica between 5-15 phr and a layer thickness of 100-1,500 µm.

27. A double-coated film according to claim 26, wherein the other exposed adhesive layer comprises a non-removable pressure-sensitive adhesive or a pressure sensitive adhesive layer according to claims 1-8 exhibiting a crosslink density obtainable by using a tripropyleneglycoldiacrylate concentration between 0.15 and 0.40 phr, a loading with hydrophobic silica between 2-14 phr and a layer thickness between 30 and 200 µm.

28. Light-weight mounting device comprising a double-coated film according to claims 2627.

29. Use of the light-weight mounting device of claim 28 as a penholder.

30. A double-coated film according to claims 16-22 comprising a first exposed layer of a pressure sensitive adhesive according to claims 1-7 exhibiting a crosslink density obtainable by a tripropyleneglycoldiacrylate concentration between 0.15 and 0.70 phr, a loading with hydrophobic silica between 5-15 phr and a thickness of 50-300 µm and a second exposed layer of a pressure-sensitive adhesive according to claims 1-7, exhibiting a crosslink density obtainable by a tripropyleneglycoldiacrylate concentration between 0.30-1.0 phr, a loading with hydrophobic silica between 5 and 15 phr and a layer thickness between 100 and 500 µm on the other side of the backing.

31. An abrading device which comprises a rotatable back-up pad bearing a supported film according to claims 21-22 or 30 in such a way that a reactivatable pressure sensitive adhesive layer is exposed, said layer bearing a flexible abrasive disc.

32. Use ofthe double-coated films according to claim 30 for mounting flexoplates onto rotatable printing cylinders.

33. Printing device comprising one or more rotatable printing cylinders onto which flexoplates are mounted by means of a double-coated film according to claim 30.

34. A single-coated film according to claims 16-19 wherein the exposed adhesive layer comprises a pressure sensitive adhesive according to claims 1-8 which exhibits a crosslink density obtainable by using tripropyleneglycoldiacrylate in a concentration between 0.4 and 2.0 phr, a loading with hydrophobic silica between 5 and 15 phr and a thickness between 50-1,500 µm.

35. Use of a film according to claims 34 as a temporary label, sign or decorative film.

## Patentansprüche

1. Wiederablösbarer und/oder wiederaktivierbarer, tansparenter Haftklebstoff, erhältlich durch Polymerisation eines Vorläufers, enthaltend eine Monomerkomponente, die ein oder mehrere Alkylacrylate mit durchschnittlich 4-14 C-Atomen im Alkylteil enthält und im wesentlichen frei von polaren Comonomeren ist, sowie mindestens etwa 2,0 phr hydrophobes Siliciumdioxid, einen oder mehrere Polymerisationsinitiatoren und einen oder mehrere Vernetzer in einer Konzentration, die eine unter Verwendung von Tripropylenglykoldiacrylat als Referenz-Vernetzer in einer Konzentration von mindestens 0,15 phr erhältliche Vernetzungsdichte ergibt.

2. Haftklebstoff nach Anspruch 1, bei dem die Oberfläche des hydrophoben Siliciumdioxids mindestens 10 m²/g beträgt.

3. Haftklebstoff nach Anspruch 1 oder 2, der 4 bis 25 phr hydrophobes Siliciumdioxid enthält.

4. Haftklebstoff nach den Ansprüchen 1-3, der keine polaren Comonomere enthält.

5. Haftklebstoff nach den Ansprüchen 1-4, der einen oder mehrere Vernetzer in einer Konzentration, die eine unter Verwendung von Tripropylenglykoldiacrylat in einer Konzentration von mindestens 0,30 phr erhältliche Vernetzungsdichte ergibt, enthält.

6. Haftklebstoff nach den Ansprüchen 1-4, der einen oder mehrere Vernetzer in einer Konzentration, die eine unter Verwendung von Tripropylenglykoldiacrylat in einer Konzentration von mindestens 1,0 phr erhältliche Vernetzungsdichte ergibt, enthält.

7. Haftklebstoff nach den Ansprüchen 1-5, bei dem die Konzentration der Alkylacrylate, bezogen auf die Masse des Haftklebstoff-Vorläufers, mindestens 75 Gew.% beträgt.

8. Haftklebstoff nach den Ansprüchen 1-7, der ein oder mehrere Hilfsmittel aus der Gruppe bestehend aus Kettenübertragungsmitteln, Lösungsmitteln, Flammschutzmitteln, Pigmenten, Farbmitteln, Farben und Geruchsüberdeckungsmitteln enthält.

9. Trägerlose Folie, die den Haftklebstoff nach den Ansprüchen 1-8 enthält.

10. Trägerlose Folie nach Anspruch 9, die eine Dicke von 30 bis 200 µm aufweist und deren Haftklebstoff hydrophobes Siliciumdioxid in einer Menge von 10 bis 20 phr enthält und eine unter Verwendung von Tripropylenglykoldiacrylat in einer Konzentration von 0,15 bis 0,40 phr erhältliche Vernetzungsdichte aufweist.

11. Trägerlose Folie nach Anspruch 9, die eine Dicke von 200 bis 1500 µm aufweist und deren Haftklebstoff hydrophobes Siliciumdioxid in einer Menge von 10 bis 20 phr enthält und eine unter Verwendung von Tripropylenglykoldiacrylat in einer Konzentration von 0,35 bis 1,0 phr erhältliche Vernetzungsdichte aufweist.

12. Trägerlose Folie nach Anspruch 9, die eine Dicke von 100 bis 1500 µm aufweist und deren Haftklebstoff hydrophobes Siliciumdioxid in einer Menge von 5 bis 16 phr enthält und eine unter Verwendung von Tripropylenglykoldiacrylat in einer Konzentration von 0,40 bis 2,0 phr erhältliche Vernetzungsdichte aufweist.

13. Trägerlose Folie nach Anspruch 9, die eine Dicke von 500 bis 3000 um aufweist und deren Haftklebstoff hydrophobes Siliciumdioxid in einer Menge von 2,5 bis 12,5 phr enthält und eine unter Verwendung von Tripropylenglykoldiacrylat in einer Konzentration von 2,0 bis 3,0 phr erhältliche Vernetzungsdichte aufweist.

14. Verwendung einer trägerlosen Folie nach Anspruch 11 für Montageanwendungen.

15. Trägerlose Folie nach Anspruch 9, die eine Dicke von 50 bis 2000 µm aufweist und deren Haftklebstoff hydrophobes Siliciumdioxid in einer Menge von 10 bis 20 phr enthält und eine unter Verwendung von Tripropylenglykoldiacrylat in einer Konzentration von 0,17 bis 0,40 phr erhältliche Vernetzungsdichte aufweist.

16. Geträgerte Folie mit einem Träger mit mindestens einer freiliegenden Klebstoffschicht bzw. mindestens einer freiliegenden Klebstoffschicht auf jeder der beiden Seiten des Trägers unter Ausbildung einer einseitig bzw. doppelseitig beschichteten Folie, wobei es sich bei der freiliegenden Klebstoffschicht der einseitig beschichteten Folie und bei mindestens einer der freiliegenden Klebstoffschichten der doppelseitig beschichteten Folie um einen Haftklebstoff nach den Ansprüchen 1-8 handelt.

17. Geträgerte Folie nach Anspruch 16, deren Träger aus der Gruppe bestehend aus Polyolefinen, Polyestern, Polycarbonaten, Polymethacrylaten, Papier, Vliesstoffen, Laminaten, mechanischen Verbindungselementen, Metallen, Geweben oder Tuch ausgewählt ist.

18. Geträgerte Folie nach den Ansprüchen 16-17, deren Träger eine Dicke von 50 µm bis 3000 µm aufweist.

19. Geträgerte Folie nach den Ansprüchen 16-18, deren Träger einer Behandlung mit chemischen Primern oder einer Koronabehandlung unterworfen wird.

20. Doppelseitig beschichtete Folie nach den Ansprüchen 16-19, bei der sich die Werte der 90°Abschälprüfung der beiden freiliegenden Klebstoffschichten auf rostfreiem Stahl nach einer Verweilzeit von 20 Minuten bei Raumtemperatur um mindestens 10% unterscheiden.

21. Doppelseitig beschichtete Folie mit einem Träger mit mindestens einer freiliegenden Klebstoffschicht auf jeder der gegenüberliegenden Trägerseiten, bei der es sich bei mindestens einer der Schichten um einen wiederaktivierbaren und wiederablösbaren Haftklebstoff mit einem Wert für die 90°-Abschälprüfung der Schicht aus unkontaminiertem, frisch hergestelltem Haftklebstoff auf rostfreiem Stahl nach einer Verweilzeit von 20 Minuten bei Raumtemperatur von 3 N/1,27 cm und 20 N/1,27 cm handelt.

22. Doppelseitig beschichtete Folie nach Anspruch 20 mit mindestens einem freiliegenden Haftklebstoff nach den Ansprüchen 1-8.

23. Doppelseitig beschichtete Folie nach den Ansprüchen 16-22, bei der es sich bei einer der freiliegenden Klebstoffschichten um einen Haftklebstoff nach den Ansprüchen 1-8 mit einer unter Verwendung von Tripropylenglykoldiacrylat in einer Konzentration von 1,5 bis 5,0 phr erhältlichen Vernetzungsdichte, einer Beladung mit hydrophobem Siliciumdioxid von 5 bis 15 phr und einer Schichtdicke von 200 bis 2000 µm handelt.

24. Doppelseitig beschichtete Folie nach Anspruch 23, bei der die andere freiliegende Klebstoffschicht einen nicht wiederablösbaren Haftklebstoff oder eine Haftklebstoffschicht nach den Ansprüchen 1-8 mit einer unter Verwendung von Tripropylenglykoldiacrylat in einer Konzentration von 0,15 bis 0,40 phr erhältlichen Vernetzungsdichte, einer Beladung mit hydrophobem Siliciumdioxid von 2 bis 12,5 phr und einer Schichtdicke von 30 bis 300 µm enthält.

25. Verwendung der geträgerten Folien nach den Ansprüchen 23-24 als rutschfeste Unterlage oder zur Immobilisierung von Gütern beim Transport.

26. Doppelseitig beschichtete Folie nach den Ansprüchen 16-22, bei der es sich bei einer der freiliegenden Klebstoffschichten um einen Haftklebstoff nach den Ansprüchen 1-8 mit einer unter Verwendung von Tripropylenglykoldiacrylat in einer Konzentration von 0,5 bis 1,5 phr erhältlichen Vernetzungsdichte, einer Beladung mit hydrophobem Siliciumdioxid von 5 bis 15 phr und einer Schichtdicke von 100 bis 1500 µm handelt.

27. Doppelseitig beschichtete Folie nach Anspruch 26, bei der die andere freiliegende Klebstoffschicht einen nicht wiederablösbaren Haftklebstoff oder eine Haftklebstoffschicht nach den Ansprüchen 1-8 mit einer unter Verwendung von Tripropylenglykoldiacrylat in einer Konzentration von 0,15 bis 0,40 phr erhältlichen Vernetzungsdichte, einer Beladung mit hydrophobem Siliciumdioxid von 2 bis 14 phr und einer Schichtdicke von 30 bis 200 µm enthält.

28. Leichte Montagevorrichtung mit einer doppelseitig beschichteten Folie nach den Ansprüchen 26-27.

29. Verwendung der leichten Montagevorrichtung nach Anspruch 28 als Stifthalter.

30. Doppelseitig beschichtete Folie nach den Ansprüchen 16-22 mit einer ersten freiliegenden Schicht eines Haftklebstoffs nach den Ansprüchen 1-7 mit einer unter Verwendung von Tripropylenglykoldiacrylat in einer Konzentration von 0,15 bis 0,7 phr erhältlichen Vernetzungsdichte, einer Beladung mit hydrophobem Siliciumdioxid von 5 bis 15 phr und einer Schichtdicke von 50 bis 300 µm und einer zweiten freiliegenden Schicht eines Haftklebstoffs nach den Ansprüchen 1-7 mit einer unter Verwendung von Tripropylenglykoldiacrylat in einer Konzentration von 0,30 bis 1,0 phr erhältlichen Vernetzungsdichte, einer Beladung mit hydrophobem Siliciumdioxid von 5 bis 15 phr und einer Schichtdicke von 100 bis 500 um auf der anderen Seite des Trägers.

31. Schleifvorrichtung mit einem drehbaren Stützteller, der eine geträgerte Folie nach den Ansprüchen 21-22 oder 30 so trägt, daß eine Schicht aus wiederaktivierbarem Haftklebstoff freiliegt, wobei die Schicht eine flexible Schleifscheibe trägt.

32. Verwendung der doppelseitig beschichteten Folien nach Anspruch 30 zur Montage von Flexoplatten auf drehbaren Druckzylindern.

33. Druckvorrichtung mit drehbaren Druckzylindern, auf denen Flexoplatten mit Hilfe einer doppelseitig beschichteten Folie nach Anspruch 30 montiert sind.

34. Einseitig beschichtete Folie nach den Ansprüchen 16-19, bei der die freiliegende Klebstoffschicht einen Haftklebstoff nach den Ansprüchen 1-8 mit einer unter Verwendung von Tripropylenglykoldiacrylat in einer Konzentration von 0,4 bis 2,0 phr erhältlichen Vernetzungsdichte, einer Beladung mit hydrophobem Siliciumdioxid von 5 bis 15 phr und einer Schichtdicke von 50 bis 1500 µm enthält.

35. Verwendung einer Folie nach Anspruch 34 als temporäre Etiketten, Schilder oder dekorative Folien.

## Revendications

1. Adhésif autocollant transparent, pelable et/ou réactivable, pouvant être obtenu par polymérisation d'un précurseur comprenant un composant monomère qui renferme un ou plusieurs acrylates d'alkyle, dont les groupes alkyle ont en moyenne 4-14 atomes de carbone et qui sont essentiellement exempts de comonomères polaires, ledit précurseur comprenant en outre au moins 2,0 pcr de silice hydrophobe, un ou plusieurs amorceurs de polymérisation et un ou plusieurs composés de réticulation en une concentration conduisant à une densité de réticulation pouvant être obtenue en utilisant du diacrylate de tripropylèneglycol en tant que composé de réticulation de référence en une concentration de 0,15 pcr ou plus.

2. Adhésif autocollant selon la revendication 1, dans lequel la surface spécifique de la silice hydrophobe est d'au moins 10 m²/g.

3. Adhésif autocollant selon la revendication 1 ou 2 contenant entre 4 et 25 pcr de silice hydrophobe.

4. Adhésif autocollant selon les revendications 1-3, ne contenant pas de comonomères polaires.

5. Adhésif autocollant selon les revendications 1-4, contenant un ou plusieurs agents de réticulation en une concentration donnant lieu à une densité de réticulation pouvant être obtenue en utilisant du diacrylate de tripropylèneglycol en une concentration de 0,30 pcr ou plus.

6. Adhésif autocollant selon les revendications 1-4, contenant un ou plusieurs agents de réticulation en une concentration donnant lieu à une densité de réticulation pouvant être obtenue en utilisant du diacrylate de tripropylèneglycol en une concentration de 1,0 pcr ou plus.

7. Adhésif autocollant selon les revendications 1-5, dans lequel la concentration des acrylates d'alkyle, par rapport à la masse du précurseur de l'adhésif autocollant, est de 75% en poids ou plus.

8. Adhésif autocollant selon les revendications 1-7, contenant un ou plusieurs adjuvants choisis parmi un groupe comprenant des agents de transfert de chaîne, des solvants, des ignifugeants, des pigments, des colorants, des peintures et des agents masquant les odeurs.

9. Film non supporté qui comprend l'adhésif autocollant selon les revendications 1-8.

10. Film non supporté selon la revendication 9, dont l'épaisseur est comprise entre 30 et 200 µm et dont l'adhésif autocollant contient de la silice hydrophobe en une quantité comprise entre 10 et 20 pcr et présente une densité de réticulation pouvant être obtenue en utilisant du diacrylate de tripropylèneglycol en une concentration comprise entre 0,15 et 0,40 pcr.

11. Film non supporté selon la revendication 9, dont l'épaisseur est comprise entre 200 et 1 500 µm et dont l'adhésif autocollant concient de la silice hydrophobe en une quantité comprise entre 10 et 20 pcr et présente une densité de réticulation pouvant être obtenue en utilisant du diacrylate de tripropylèneglycol en une concentration comprise entre 0,35 et 1,0 pcr.

12. Film non supporté selon la revendication 9, dont l'épaisseur est comprise entre 100 et 1 500 µm et dont l'adhésif autocollant contient de la silice hydrophobe en une quantité comprise entre 5 et 16 pcr et présente une densité de réticulation pouvant être obtenue en utilisant du diacrylate de tripropylèneglycol en une concentration comprise entre 0,40 et 2,0 pcr.

13. Film non supporté selon la revendication 9, dont l'épaisseur est comprise entre 500 et 3 000 µm et dont l'adhésif autocollant contient de la silice hydrophobe en une quantité comprise entre 2,5 et 12,5 pcr et présente une densité de réticulation pouvant être obtenue en utilisant du diacrylate de tripropylèneglycol en une concentration comprise entre 2,0 et 3,0 pcr.

14. Utilisation d'un film non supporté selon la revendication 11 pour des applications de montage.

15. Film non supporté selon la revendication 9, dont l'épaisseur est comprise entre 50 et 2 000 µm et dont l'adhésif autocollant contient de la silice hydrophobe en une quantité comprise entre 10 et 20 pcr et présente une densité de réticulation pouvant être obtenue en utilisant du diacrylate de tripropylèneglycol en une concentration comprise entre 0,17 et 0,40 pcr.

16. Film supporté comprenant un support portant au moins une couche adhésive exposée ou au moins une couche adhésive exposée sur chacune des deux faces du support en formant ainsi un film à un seul revêtement ou à deux revêtements, la couche adhésive exposée dans le film à un seul revêtement et au moins l'une des couches adhésives exposées dans le film à deux revêtements étant un adhésif autocollant selon les revendications 1-8.

17. Film supporté selon la revendication 16, dont le support est choisi parmi un groupe de matériaux comprenant des polyoléfines, des polyesters, des polycarbonates, des polyméthacrylates, des papiers, des non-tissés, des stratifiés, des attaches mécaniques, des métaux, des étoffes ou des toiles.

18. Film supporté selon les revendications 16-17, dont le support présente une épaisseur comprise entre 50 µm et 3 000 µm.

19. Film supporté selon les revendications 16-18, dont le support est soumis à des primaires chimiques ou à un traitement de décharge en couronne.

20. Film à deux revêtements selon les revendications 16-19, dans lequel les valeurs de l'adhésion de pelage à 90° des deux couches adhésives exposées sur de l'acier inoxydable après un temps de séjour de 20 minutes à température ambiante diffèrent d'au moins 10%.

21. Film à deux revêtements comprenant un support portant au moins une couche adhésive exposée sur chacune des faces opposées d'un support dans lequel au moins l'une des couches est un adhésif autocollant réactivable et pelable qui présente une valeur d'adhésion de pelage à 90° de la couche adhésive autocollante vierge non contaminée sur de l'acier inoxydable après un temps de séjour de 20 minutes à température ambiante comprise entre 3 N/1,27 cm et 20 N/1,27 cm.

22. Film à deux revêtements selon la revendication 20, comprenant au moins un adhésif autocollant exposé selon les revendications 1-8.

23. Film à deux revêtements selon les revendications 16-22, dans lequel l'une des couches adhésives exposées est un adhésif autocollant selon les revendications 1-8, présentant une densité de réticulation pouvant être obtenue en utilisant une concentration en diacrylate de tripropylèneglycol comprise entre 1,5 et 5,0 pcr, une charge de silice hydrophobe comprise entre 5 et 15 pcr et une épaisseur de couche de 200-2 000 µm.

24. Film à deux revêtements selon la revendication 23, dans lequel l'autre couche adhésive exposée comprend un adhésif autocollant non pelable ou une couche adhésive autocollante selon les revendications 1-8 présentant une densité de réticulation pouvant être obtenue en utilisant une concentration en diacrylate de tripropylèneglycol comprise entre 0,15 et 0,40 pcr, une charge de silice hydrophobe comprise entre 2 et 12,5 pcr et une épaisseur de couche comprise entre 30 et 300 µm.

25. Utilisation des films supportés selon les revendications 23-24 en tant que patins antidérapants ou pour l'immobilisation d'articles durant le transport.

26. Film à deux revêtements selon les revendications 16-22, dans lequel l'une des couches adhésives exposées est un adhésif autocollant selon les revendications 1-8, présentant une densité de réticulation pouvant être obtenue en utilisant une concentration en diacrylate de tripropylèneglycol comprise entre 0,5 et 1,5 pcr, une charge de silice hydrophobe comprise entre 5 et 15 pcr et une épaisseur de couche de 100-1 500 µm.

27. Film à deux revêtements selon la revendication 26, dans lequel l'autre couche adhésive exposée comprend un adhésif autocollant non pelable ou une couche adhésive autocollante selon les revendications 1-8 présentant une densité de réticulation pouvant être obtenue en utilisant une concentration en diacrylate de tripropylèneglycol comprise entre 0,15 et 0,40 pcr, une charge de silice hydrophobe comprise entre 2 et 14 pcr et une épaisseur de couche comprise entre 30 et 200 µm.

28. Dispositif de montage léger comprenant un film à deux revêtements selon les revendications 26-27.

29. Utilisation du dispositif de montage léger selon la revendication 28 en tant que porte-plume.

30. Film à deux revêtements selon les revendications 16-22, comprenant une première couche exposée d'un adhésif autocollant selon les revendications 1-7, présentant une densité de réticulation pouvant être obtenue par une concentration en diacrylate de tripropylèneglycol comprise entre 0,15 et 0,70 pcr, une charge de silice hydrophobe comprise entre 5 et 15 pcr et une épaisseur de 50-300 µm et une deuxième couche exposée d'un adhésif autocollant selon les revendications 1-7, présentant une densité de réticulation pouvant être obtenue par une concentration en diacrylate de tripropylèneglycol comprise entre 0,30 et 1,0 pcr, une charge de silice hydrophobe comprise entre 5 et 15 pcr et une épaisseur de couche comprise entre 100 et 500 µm sur l'autre face du support.

31. Dispositif abrasif qui comprend un patin de soutien rotatif portant un film supporté selon les revendications 21-22 ou 30, de telle manière qu'une couche adhésive autocollante réactivable soit exposée, ladite couche portant un disque abrasif flexible.

32. Utilisation des films à deux revêtements selon la revendication 30, pour le montage de plaques flexibles sur des cylindres d'impression rotatifs.

33. Dispositif d'impression comprenant un ou plusieurs cylindres d'impression rotatifs sur lesquels sont montées des plaques flexibles au moyen d'un film à deux revêtements selon la revendication 30.

34. Film à un seul revêtement selon les revendications 16-19, dans lequel la couche adhésive exposée comprend un adhésif autocollant selon les revendications 1-8, qui présente une densité de réticulation pouvant être obtenue en utilisant du diacrylate de tripropylèneglycol en une concentration comprise entre 0,4 et 2,0 pcr, une charge de silice hydrophobe comprise entre 5 et 15 pcr et une épaisseur comprise entre 50 et 1 500 µm.

35. Utilisation d'un film selon la revendication 34, en tant que film décoratif, signe ou étiquette temporaire.
